Europäisches Patentamt

(19) **European Patent Office**

Office européen des brevets

(11) Publication number: **0 027 902**
**A1**

(12) # EUROPEAN PATENT APPLICATION

(21) Application number: **80105788.6**

(22) Date of filing: **25.09.80**

(51) Int. Cl.³: **G 06 F 3/12**

(30) Priority: **19.10.79 US 86490**

(43) Date of publication of application: **06.05.81**
**Bulletin 81/18**

(84) Designated Contracting States: **DE FR GB**

(71) Applicant: **International Business Machines Corporation, Armonk, N.Y. 10504 (US)**

(72) Inventor: **Greene, Willard Bennington, 1054 SW 7 Street, Boca Raton, Florida 33432 (US)**
Inventor: **Pavek, David Christian, 3415 Lakeview Drive, Delray Beach, Florida 33445 (US)**
Inventor: **Weber, Charles Joseph, 784 NW 7 Street, Boca Raton, Florida (US)**
Inventor: **Zimmerman, Lee, Tyrrell, 1322 SW 12 Avenue, Boca Raton, Florida 33432 (US)**

(74) Representative: **Dematte, Roland, COMPAGNIE IBM FRANCE Département de Propriété Industrielle, F-06610 - La Gaude (FR)**

(54) **Automatic print inhibit device for printer subsystem.**

(57) A matrix printer subsystem incorporates print wires arranged according to a slanted pattern rather than in the conventional columnar pattern. The printer subsystem is inter-connected with a host system (1) for receiving command and data information through an interface (201), the data information being entered into two text buffers, in storage (216), each of which can accommodate a complete line of data to be printed. Provision is made for entering blank characters into the text buffers each time before significant data information is entered to thereby insure that areas such as the left and right margins which are not to be printed will not have any extraneous data present therein.

EP 0 027 902 A1

ACTORUM AG

1

·AUTOMATIC PRINT INHIBIT DEVICE FOR
PRINTER SUBSYSTEM

Technical field to which the invention relates

The invention relates to an automatic print inhibit device
for a printer subsystem interconnected with a host system
sending command signals to perform various printing functions and data signals to print characters in proper print
areas on a form. The printer subsystem is provided with
storage facilities capable of accommodating lines of information. An exact image of the print lines is formed in
these storage facilities including the characters to be
printed as well as blank characters. This ensures that
the data characters will be printed in the proper print
areas 'on the form taking into amount that certain areas
such as the left and right margin areas have to remain
unprinted.

Assessment of the Background Art

At times, extraneous signals are encountered during printing
operations in printer subsystems and result in the printing
of erroneous characters. An especially chronic problem
exists with respect to the margin areas, that is, those
areas to the left and to the right of a printed form, such
areas normally being expected not to have any printed information in them. If extraneous data signals are encountered during printer operations, then such signals may
affect the characters normally to be printed in the print
area as well as cause printing of information in the margin
areas.

Usually, complicated control circuits are provided to prevent
such printing. When clear margin areas are required, complicated schemes may be necessary to insure that the data

2

acquired from a memory during data transfer operations particularly from the text buffers will be printed in the proper print areas on the form taking into account that the margin areas have to remain unprinted. The present scheme involves the entry of blank characters in the margin areas which eliminates the need for complex hardware and which, in effect, forms an exact image of the print line including the characters to be printed as well as the blank characters.

Disclosure of the Invention

In accordance with the present invention, a printer subsystem is provided with storage facilities to accommodate command and data infomation received from an external source, such as a host computer system, the storage facilities including at least two text buffers, each of which is capable of accommodating an entire line of information. Prior to the entry of significant data into the text buffers which is used for controlling of printing operations, the individual text buffers are reset to a blank condition. That is, all areas in the buffer including margin areas and print areas are blanked prior to entry of information. The invention has particular utility in conjunction with a wire matrix printer that incorporates print heads having print wires arranged in a slanted wire arrangement in contrast with the conventional arrangement where the print wires are arranged in one or more columns. In the slanted wire arrangement, when the printer is in the home position, the print heads are positioned in locations that, in the embodiment described, are to the left of the actual area to be printed by the print wire groups. In a printer subsystem of this nature, it is essential that care be exercised in insuring that extraneous information does not falsely activate the print wires when it is intended that they not print wire images.

0027902

3

## Advantageous effects of the invention

In accordance with the preferred embodiment of the invention, the text buffers being blanked prior to entry of significant information, results in the supply of accurate print signals to the print wires and an improved quality of printing not obtained before.

It increases reliability of printing and minimizes printing errors.

## Description of one way of carrying out the invention

For a better understanding of the present invention, together with other and further advantages and features thereof, reference is made to the description taken in connection with the accompanying drawings, which illustrate only one specific embodiment.

## Brief Description of the Drawings

Referring to the drawings:

Fig. 1 is a simplified system diagram for the printer subsystem.

Fig. 2 illustrates the printer console and a number of printer components as well as forms feeding.

Fig. 3 is a frontal view of the printer unit in the printer console of Fig. 2.

Fig. 4 illustrates an operator panel useful with the printer of Figs. 1 and 2.

Fig. 5 shows a mode switch for control of on-line, off-line conditions.

4

Fig. 6 shows a gate assembly with printed circuit cards.

Fig. 7 is a frontal view of the printer console of Fig. 2 with the cover open showing a print emitter.

Fig. 8 is an exploded view of various printer assemblies including the forms feed assembly, the print assembly and the ribbon drive assembly.

Fig. 9 is a cross-sectional view at the print line of the printer of Figs. 2, 3, and 8.

Fig. 10 is a right side elevation of various printer assemblies shown in Fig. 8.

Fig. 11 is a view of a ribbon shield having a print aperture positioned in a horizontal plane.

Fig. 12 is a cross-sectional view of the ribbon shield on the lines 12-12 in Fig. 11.

Fig. 13 is an overhead view of the printer slightly from the rear of the unit showing the forms feed open.

Fig. 14 illustrates a print wire block assembly and associated guide.

Figs. 15 and 16 illustrate front and rear faces of the guide shown in Fig. 14.

Figs. 17-19 illustrate an alternative mounting of print wire actuators with an angled face on the block assembly.

Figs. 20-22 illustrate mounting of print wire actuators with a flat face on the actuator block assembly.

5

Figs. 23-26 illustrate a print wire actuator, a plurality of which are mounted in the block assembly shown in Fig. 14.

Figs. 27 and 28 illustrate an alternative forms feed assembly for the printer unit.

Fig. 29 illustrates the arrangement of print wires in groups relative to a left margin in the printer unit.

Fig. 30 illustrates printing of characters at 10 characters per inch and 15 characters per inch.

Figs. 31 and 32 illustrate the print emitter and its operating scheme.

Figs. 33A and 33B, when arranged as shown in Fig. 34, show in greater detail the relationship of the print wires to character locations on the forms to be printed.

Fig. 35 is a generalized block diagram of the printer control unit shown in Fig. 1.

Figs. 36 and 37 further illustrate the arrangement of dots to form characters and the relationship of the print wires to the various character locations.

Figs. 38-40 illustrate various systems in which the printer subsystem may be connected.

Fig. 41 illustrates a stream of information between the host system and the printer subsystem.

Fig. 42 illustrates significance of bits in the frames

6

during a receive mode when information is transferred from the controller to the printer subsystem.

Fig. 43 illustrates bit significance for the frames during a transmit mode when information is transferred from the printer subsystem to the controller.

Fig. 44 illustrates the bit configurations for printer addressing.

Fig. 45 shows command and data arrangements in the information stream.

Fig. 46 is a chart illustrating a typical transfer of data to be printed.

Figs. 47A and 47B illustrate representative operational and formatting commands.

Figs. 48 and 49 illustrate frame layout for status reports during a Poll operation.

Fig. 50 is a block diagram of various circuit components used in the printer subsystem of Figs. 1 and 2.

Figs. 51A and 51B, when arranged as shown in Fig. 52, comprise a block diagram of the printer control unit including a Communications microprocessor (CMM) and a Control microprocessor (CTM) as well as a number of elements in the printer unit.

Fig. 53 illustrates a typical data transfer and printing operation in the printer subsystem.

Fig. 54 is a generalized flowchart of operations performed by the Communications microprocessor (CMM) shown in Fig. 51A.

Fig. 55 is a generalized flowchart of operations performed by the Control microprocessor (CTM) shown in Fig. 51B.

Fig. 56 illustrates the layout of Read Only Storage and Random Access Memory locations used with the Communications microprocessor in the printer subsystem.

Fig. 57 illustrates intercommunication and transfer of data between the Communications microprocessor and the Control microprocessor in the printer subsystem.

Fig. 58 is a layout of the text buffers used in conjunction with the Communications microprocessor.

Fig. 59A illustrates entry to the text buffers while Figs. 59B and 59C illustrate saving and restoring of the overlays.

Fig. 60 represents an expansion of the blanking of the text buffers shown in Fig. 59A.

8

Fig. 61 is a general representation in flowchart form of the setup and transfer of data into the text buffers.

Fig. 62 illustrates layout of various internal registers in the Control microprocessor.

Description of Printer Subsystem and Printer
Mechanisms

In order to best illustrate the utility of the present invention, it is described in conjunction with a high speed matrix printer, typically capable of printing in a high range of lines per minute on continuous forms.  The particular printer subsystem described herein is associated with a host system or processor, responds to command and data signals from the host to print on the forms and in turn provides status signals to the host during operations.

The printer itself is an output line printer designed to satisfy a variety of printing requirements in data processing, data collection, data entry, and communications systems.  It can be used as a system printer or a remote work station printer.

The following printer highlights are of interest:

Print density of 10 or 15 characters per
inch (25,4= mm) selectable by the operator
or by the using system program;

Condensed print mode, 15 characters per inch saves paper costs and makes report handling, mailing, reproduction, and storage easier;

Line spacing of 6, or 8 lines per inch or any other line density selectable by the operator or by the using system program;

Incremental and reverse forms movement selectable by the using system program;

Sixteen self-contained character sets selectable by the using system program with a base language selected by hardware jumpers.

Special graphics ability (special characters, graphs, plotting, etc.) selectable by the using system program;

Matrix printing technology;

Built-in diagnostics for problem determination by the operator;

Microprocessor control unit;

Maximum print line width - 330,2 mm.

Maximum print positions for 10 characters per inch - 132;

Maximum print positions for 15 characters per inch - 198;

Adjustable forms width - 76,2 to 450 mm;

Maximum forms length - 76,2 to 317,5 mm;

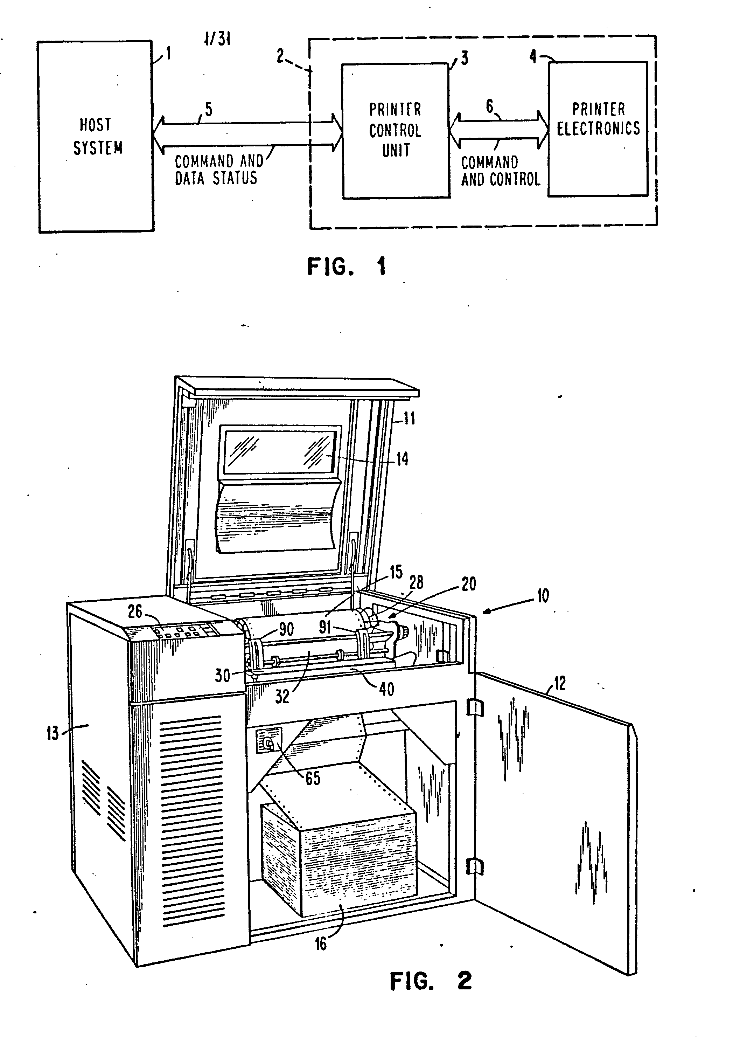

Fig. 1 illustrates a representative system configuration including a host system 1 and the printer subsystem 2 which includes a printer control unit 3 and printer electronics 4. Command and data signals are provided by the host system by way of interface 5, and command and control signals are provided from printer control unit 3 to the printer electronics 4 by way of bus 6. Status signals are supplied by printer control unit 3 to host system 1 by way of interface 5. Typically, the host system 1 generates information including commands and data and monitors status. Printer control unit 3 receives the commands and data, decodes the commands, checks for errors and generates status information, controls printing and spacing, and contains printer diagnostics. Printer electronics 4 executes decoded control unit commands, monitors all printer operations, activates print wires, drives motors, senses printer emitters, and controls operator panel lights and switching circuitry. It controls the tractor/platen mechanism, the ribbon drive, the print head (i.e., actuator group) carrier, the operator panel, and the printer sensors.

The elements of the system, such as the printer control unit and printer electronics, incorporate one or more microprocessors or microcomputers to analyze commands and data and to control operations.

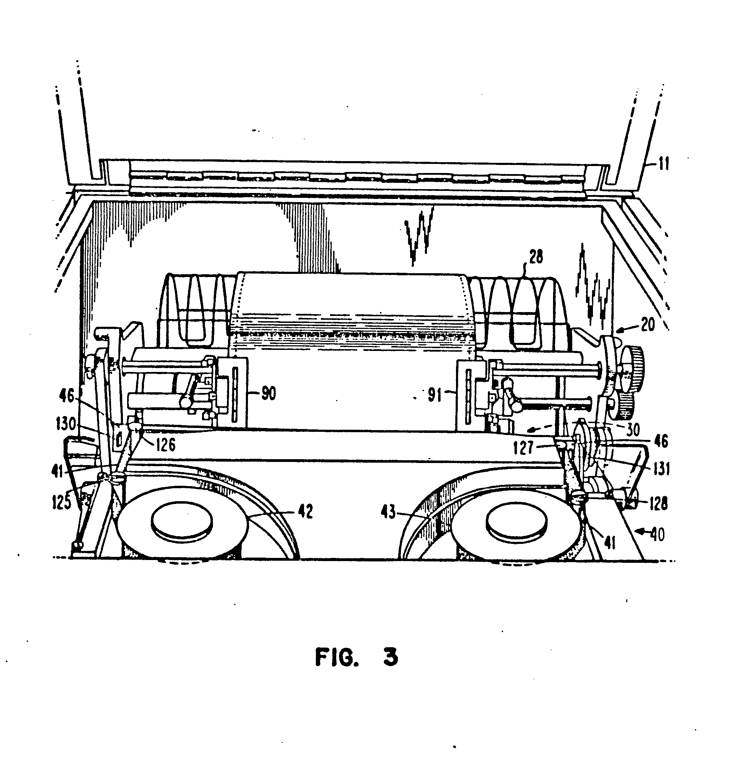

Figs. 2 and 3 illustrate various components of the printer all of which are housed in the console 10. Various access panels or covers such as those designated 11, 12, and 13 are provided. Top cover 11 has a window 14 that enables an operator to observe forms movement during operation of the printer and when the cover is closed. Forms (documents) 15 are provided from a stack 16 and can be fed in one embodiment upwardly or downwardly as viewed in Figs. 2 and 3 by means of a forms feed assembly 20 which includes one or more sets of forms tractors such as the upper set comprising tractors 90 and 91. A forms guide 28 guides the forms after printing to a takeup stack, not shown but positioned below the printing mechanism and to the rear of the printer console. The printer incorporates a print assembly 30 that is positioned generally in a horizontal relationship with respect to forms 15 at a print station 32. Print assembly 30 is more clearly visible in other views. This is also true of the printer ribbon drive assembly 40 which is located in closer proximity to the front of the printer. Printer control unit 3 and its associated microprocessors are generally located behind the side cover 13.

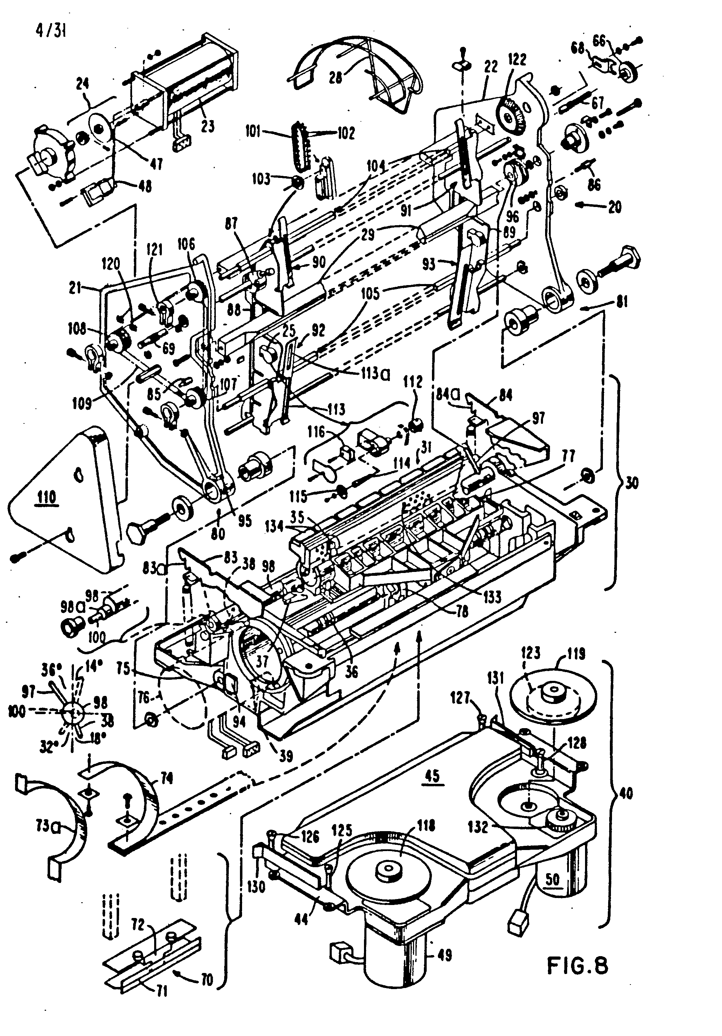

As best seen in Fig. 3, a ribbon 41 is provided on one of the spools 42 or 43, which are disposable. Each box of ribbons would preferably contain a disposable ribbon shield 46 that fits between print assembly 30 and forms 15 to keep ribbon 41 in proper alignment and to minimize hold ink smudging on forms 15. Two motors shown more clearly in Fig. 8 drive ribbon 41 back and forth between spools 42 and 43. The printer control unit detects ribbon jams and end of ribbon (EOR) conditions. A ribbon jam turns on an error indicator and stops printing. An EOR condition reverses the ribbon drive direction.

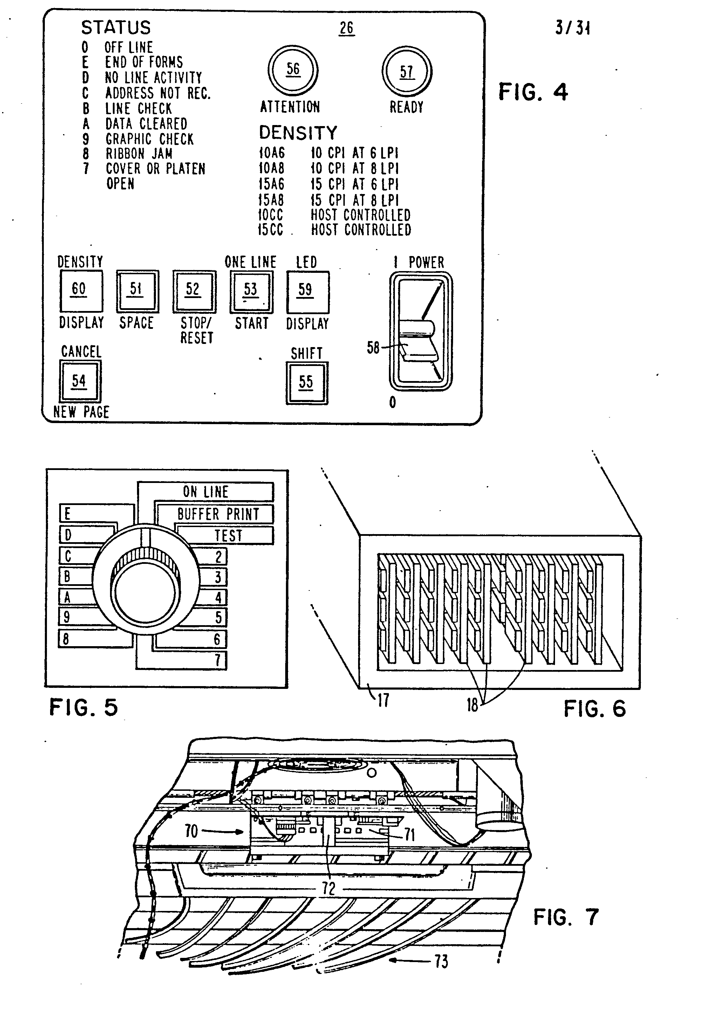

The printer includes an operator panel 26 (shown in greater detail in Fig. 4) that consists of several operator control keys (pushbuttons 51-55 and 60), two indicator lights 56, 57, a power on/off switch 58, and an operator panel display 59. By using various combinations of the keys in conjunction

12

with the shift key 55 the operator can:start or stop printing and view the last line printed, set print density, position the forms up or down one page or one line at a time, move the forms incrementally up or down for fine adjustment, and start or stop the diagnostic tests when selected by a mode switch, to be described.

The indicator lights on the operator panel display notify the operator that:the printer is ready to print data from the using system (indicator light 57), the printer requires attention (indicator light 56), the current print density setting (panel display 59), errors, if any, have been detected, and the results of the diagnostic tests (panel display 59).

A 16-position mode switch 65 is located behind the front door 12 and is shown in greater detail in Fig. 5. The on-line positions permits printing to be controlled by the using system. All other positions are off-line and do not allow printing to be initiated from the using system.

The first two switch positions are used by the operator to select these modes:

On-line. The normal operating position. With the switch in this position, the printer accepts commands from the using system. The operator panel display 59 indicates any detected error conditions.

Buffer Print. An additional on-line position which prints the EBCDIC values (hexadecimal codes) sent from the host and the associated character images. No control characters are interpreted. This feature allows the user to view the data stream sent to the printer.

Test. For off-line checkout and problem determination. In test mode, when Start key 53 is pressed, the Attent indicator 56 stays on and Ready indicator 57 is turned

13

on until the diagnostic tests that are stored in the printer control unit are finished or the Stop key is pressed. If an error is detected, the printer stops and displays an error code in the operator panel display 59.

The remaining thirteen (13) positions of the mode switch designated "2-9" and "A-E" are used by service personnel to select a variety of diagnostic tests to aid in off-line problem determination and confirmation of service requirements.

Fig. 6 illustrates a gate assembly 17 located behind side cover 13, Fig. 2, the gate assembly including modular printed circuit cards such as cards 8 that contain much of the circuit elements for printer control unit 3 and printer electronics 4, Fig. 1.

Fig. 7 is a frontal view of a print emitter assembly 70 that includes an emitter glass 71 and an optical sensor assembly 72. Glass 71 is vertically positioned with respect to sensor assembly 72 and is mechanically attached to print mechanism 30 so that as the print heads, print actuators, and print wires move back and forth left to right and conversely as viewed in Fig. 7, glass 71 also moves in the same manner with respect to sensor assembly 72 to indicate horizontal position of the print wires. Cabling 73 supplies signals to the print actuators which are described in detail below.

Overview of Printer Mechanisms

Figs. 8, 9 and 10, among others, show the detail of construction of the forms feed assembly 20, the print assembly 30, the ribbon drive assembly 40, and various associated emitters. A general overview of these assemblies is first presented.

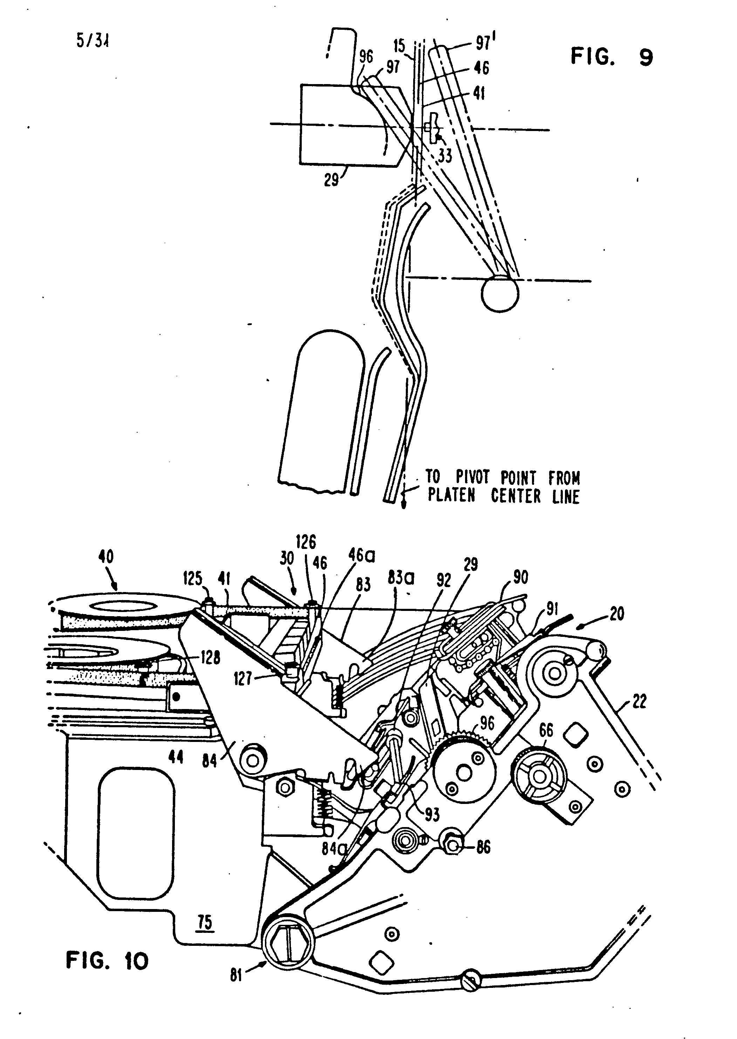

As best seen in Figs. 8 and 10, forms feed assembly 20 has end paltes (side castings) 21 and 22 which support the various forms feed mechanisms including a drive motor 23 to drive tractors 90-93, the motor having a forms feed emitter assembly 24. The forms feed assembly has a separate end of forms and jam detector emitter 25. Assembly 20 also includes a platen 29 located behind the forms and against which the print wires 33 are actuated during printing (See Fig. 9).

The print assembly 30 includes a base casting 75 supporting various mechanisms including print motor 76, shown in phantom in Fig. 8 in order that other elements may be seen more easily, and connected to drive a print head carrier 31 with actuator block assembly 77 in a reciprocal fashion horizontally to effect printing on an inserted form. The print assembly also drives the print emitter assembly 70 having emitter glass 71 and optical sensor assembly 72.

The ribbon drive assembly 40 includes a support casting 44, a cover 45, and drive motors 49 and 50.

Forms Feed Assembly

In order to load paper in the printer the forms feed assembly 20 pivots away from the base casting 75 at pivot points 80 and 81, the latter pivot point being best seen in Fig. 10, to allow access to thread the forms into position. Latches 83 and 84 are raised by the operator so that extremities 83a and 84a disengage eccentric pins 85 and 86 on the forms feed assembly. The forms feed tractor then pivots away from the operator as viewed in Figs. 3 and 8 and to the right as viewed in Fig. 10. This allows access to tractors 9093 so that the operator may load paper. The forms feed assembly is then reclosed and relatched by latches 83 and 84 for normal machine operation. During the time that the forms feed assembly is pivoted back for service, a switch 94 prevents machine operation. This switch is actuated by a tang 95 on forms feed assembly 20 when it is closed.

Referring to Fig. 8, the forms feed assembly includes means for adjusting for forms thickness. As mentioned, the entire forms feed assembly pivots back from the rest of the printer about pivot points 80 and 81. In the closed position the forms feed assembly is in such a position that a spiral cam 96 engages a pin 97 on the main carrier shaft 98 of the print assembly 30 (see also Fig. 9). Adjustment of the spiral cam and knob assembly 96 is such that it rotates the main carrier shaft 98. Assembly 96 is retained in position by a spring loaded detent assembly. This has a spring loaded pin which engages notches in the knob so that it is held in the position set by the operator. Associated with shaft 98 are eccentrics such as portion 98a on the left end of shaft 99 with tenon 100 onto which latch 83 is mounted. Rotation of shaft 98 thus moves latches 83 and 84 which changes the distance between assemblies 20 and 30 and thus the distance between the ends of print wires 33 and platen 29. This adjustment enables the printer to accomodate forms of various thicknesses. The printer can handle forms from one part to six parts thickness.

The paper feeding is accomplished by the four sets of tractors 90-93 two above the print line and two below the print line. The individual tractors include drive chains to which pins are attached at the proper distance to engage the holes in the form. As an example, tractor 90 has drive chain 101 with pins 102. Chain 101 is driven by a sprocket 103 attached to a shaft 104 which also drives the sprocket and chains for tractor 91. Tractors 92 and 93 are driven from shaft 105. Because the tractors are above and below the print line, the printer is able to move the paper in either direction. The normal direction of forms drive is upwardly in Figs. 3 and 8. However, it is possible to move the paper downwardly, as well.

Rotation of shafts 104 and 105 and forms feeding is accomplished by appropriate drive of motor 23 in the proper direction which in turn drives pulleys 106 and 107 (to which

16

shafts 104 and 105 are connected) from motor pulley 108 by means of drive-timing belt 109. Cover 110 covers belt 109 and pulleys 106-108 during rotation. The forms feed emitter assembly 24 includes an emitter wheel 47 with marks to indicate rotation and a light emitting diode assembly 48 that serve to indicate extent of rotation of motor 23 in either direction and as a consequence, the extent of movement of the forms as they are driven by motor 23.

The capability of the printer to feed paper in both directions offers some advantages. For example, in order to improve print visibility at the time the Stop button is pushed by the operator, the paper may be moved up one or two inches above where it normally resides so that it can be easily read and can be easily adjusted for registration. When the Start key is depressed, the paper is returned to its normal printing position back out of view of the operator. The printer may also be used in those applications where plotting is a requirement. In this case a plot may be generated by calculating one point at a time and moving the paper up and down much like a plotter rather than calculating the entire curve and printing it out from top to bottom in a raster mode.

End of forms and jam detection is accomplished in this assembly by a sprocket 112 just above the lower left tractor. The teeth in this sprocket protrude through a slot 113a in the flip cover 113. This sprocket is not driven by any mechanism but simply is supported by a bearing. The sprocket engages the feed holes in the paper as it is pulled past by the tractor assemblies. On the other end of the shaft 114 from the sprocket is a small optical emitter disc 115. The marks in this disc are sensed by an LED phototransistor assembly 116 and supplied to the electronics of the subsystem. The electronics verifies that marks have passed the phototransistor at some preselected frequency when the paper is being fed. If the mark is not sensed during that time, the machine is shut down as either the end of forms has occurred or a paper jam has occurred.

The castings 88 and 89 supporting the tractors 90-93 are adjustable left or right in a coarse adjustment in order to adjust for the paper size used in a particular application. After they are properly positioned they are locked in place on shaft 67 by locking screws such as locking screw 87.

All tractors are driven by the two shafts 104 and 105 from motor 23 as previously described. The motor adjusts in the side casting 21 in slots 120 in order to provide the correct tension for belt 109.

Besides the coarse adjustment, there is also a fine adjustment which is used to finally position in very small increments laterally the location of the printing on the forms. This is done by a threaded knob 66 which engages shaft 67 to which both tractor castings clamp. This shaft floats between side castings 21 and 22 laterally. The threads in knob 15 engage threads on the right end of shaft 67. The knob is held in a solid position by a fork 68. Therefore knob 66 stays stationary and the threads driving through the shaft force shaft 67 laterally left or right, depending upon the direction in which knob 66 is rotated. Shaft 67 is always biased in one direction to take out play by a spring 69 on the left end of shaft. As the paper leaves the top of the tractors, it is guided up and toward the back of the machine and down by the wire guide 28.

In order to insure that the distance between the pins in the upper tractors is in correct relationship to the pins in the lower tractors an adjustment is performed. This adjustment is made by inserting a gauge or piece of paper in the tractor assembly which locates the bottom pins in the correct relationship to the top pins. This is done by loosening a clamp 121 on the end of shaft 104. Once this position is

18

obtained, then clamp 121 is tightened and in effect phases the top set of tractors to the bottom set so that holes in the paper will engage both sets of tractors correctly. Forms may be moved through the tractor forms feed mechanism manually by rotating knob 122. This knob simply engages the top drive shaft 104 of the upper tractor set and through the timing belt 109 provides rotational action to the lower tractor set, as well.

Print Assembly

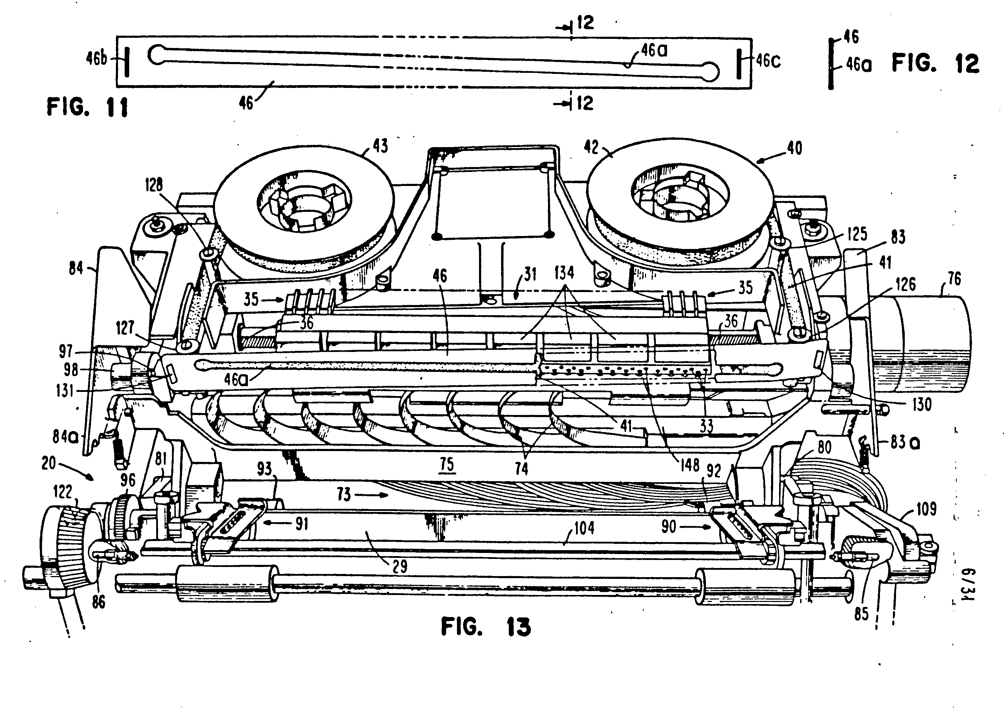

In Fig. 8, a carrier 31 comprising actuator block 77 and support 78 accommodate all the print heads with their wire actuators 35 and print wires 33. Also, see Figs. 13 and 14-26. Actuator block 77 is designed to hold from two up to eight or nine print head groups of eight actuators each. Thus, a printer with eight print head groups, as shown in Figs. 8 and 13, has sixty-four print wire actuators and sixty-four associated print wires. Only two actuators 35 are shown positioned in place in Fig. 8. The other sixty-two actuators would be located in apertures 133 only a few of which are depicted. To insure long life of the print wires, lubricating assemblies 134 containing oil wicks are positioned in proximity to the print wires. The print wire actuators fire the wires to print dots to form characters. Carrier 31 is shuttled back and forth by a lead screw 36 driven by motor 76. Lead screw 36 drives the carrier back and forth through nuts which are attached to the carrier. When carrier 31 is located at the extreme left, as viewed in Figs. 3 and 8 (to the right as viewed in Fig. 13), this is called the "home position". When the carrier is moved to the home position, a cam 37 attached to the carrier engages a pin 38, the pin being attached to the main carrier shaft 98. If the machine has not been printing for some period of time, in the neighborhood of a few seconds, the printer control unit signals the carrier to move all the way to the left, in which case cam 37 engages pin 38 to rotate the main carrier shaft 98 approximately 15 degrees. On each end of the shaft are the eccentrically located tenons, such as tenon 100, previously described. These tenons engage the latches 83 and 84 so that the distance between the print assembly and the forms feed assembly is controlled by the latches. As shaft 98 rotates, the eccentrics associated with latches 83 and 84 separate the forms feed assembly from the print assembly.

The purpose of motor 76, of course, is to move the carrier 31 back and forth in order to put the print actuators 35 and print wires 33 in the proper positions to print dots and form characters. Since the motion is back and forth, it requires a lot of energy to get the mass of carrier 31 and actuators 35 stopped and turned around at the end of each print line. A brushless DC motor is used. The commutation to the windings in the motor is done external to the motor through signals sent out of the motor via a Hall effect device emitter 39. In other words, the emitter 39 within the motor sends a signal out telling the printer control unit that it is now time to change from one motor winding to the next. Therefore, there are no rubbing parts or sliding parts within the motor, and switching is done externally via electronics based on the signals that the motor sends out from its emitter. The motor draws about 20 amperes during turnaround time and, because of the high current it draws and because of the torque constant required from the motor, it is built with rare earth magnets of Samarium cobalt which provide double the flux density of other types of magnets.

Samarium cobalt is not just used because of the higher flux density but also because its demagnetization occurrence is much higher and, therefore, more current can be sent through the motor without demagnetizing the internal magnets. During printing, carrier 31 that holds the print actuators 35 goes at a velocity of approximately 63,5cm per second. The turnaround cycle at the end of the print line requires 28 milliseconds approximately, resulting in a Gravity or "G" load in the neighborhood of 4 G's. The carrier, with all the actuators mounted, weighs about 3,85 Kg.

The current necessary to fire the print actuators is carried to the actuators via the cable assemblies 73, Figs. 7 and 13, one for each group of eight actuators. The cabling, such as cable 73a, Fig. 8, is set in the machine in a semicircular loop so that as carrier 31 reciprocates it allows the cable to roll about a radius and therefore not put excessive stress on the cable wires. This loop in the cable is formed and held in shape by a steel backing strap 74. In this case there is one cable assembly for each group of eight actuators or a maximum of eight cable backing strap groups.

## Ribbon Drive Assembly

The ribbon drive assembly 40 for the printer is shown in Fig. 8, but reference is also made to Figs. 3, 9, and 13. Spools 42 and 43 are shown with spool flanges but may be structured without spool flanges and contain the ribbon. The spools can be seen on either side of the machine near the front, Fig. 3. Gear flanges 118 and 119, Fig. 8, support ribbon spools 42 and 43, respectively. Drive for spool 43, as an example, is from motor 50, pinion gear 132 to a matching gear 119a formed on the underneath side of gear flange 119 then to spool 43. In one direction of feed, the ribbon path is from the left-hand spool 42 past posts 125 and 126, Figs. 3, 8 and 13, across the front of the ribbon drive assembly between the print heads 34 and forms 15, then past posts 127 and 128 back to the right-hand ribbon spool 43. A ribbon shield 46 to be described in conjunction with Figs. 11-13 is generally located between posts 126 and 127 and is mounted on the two attachment spring members 130 and 131.

## Ribbon Shield

Fig. 11 illustrates ribbon shield 46 that is particularly useful in the printer described herein. Fig. 12 is a cross-
sectional view along the lines 12-12 in Fig. 11. Shield 46
has an elongated aperture 46a extending almost its entire
length. The aperture enables the print wires 33 to press
against the ribbon in the printer through the shield in
order to print on forms 15. Shield 46 has slits 46b and 46c
at opposite extremities to permit easy mounting in the
printer on spring members 130 and 131 of the ribbon drive
assembly, Fig. 13.

Assembly View

Fig. 13 is an assembly view of the printer including forms
feed assembly 20, printer assembly 30, and ribbon drive
assembly 40. Ribbon drive assembly 40 includes the two
ribbon spools 42 and 43 which alternatively serve as supply
and takeup spools. If spool 42 is serving as the supply
spool, ribbon 41 will be supplied past posts 125 and 126,
through the ribbon shield 46 past posts 127 and 128 and
thence to the takeup spool 43. Shield 46, Figs. 11 and 13,
and ribbon 41, Fig. 13, are illustrated slightly on the bias
relative to horizontal which is their more normal relationship in the printer. The ribbon drive assembly 40 is also
positioned on a slight bias relative to horizontal to accommodate the bias of shield 46 and ribbon 41. In this condition aperture 46a assumes a horizontal relationship with
respect to the print wires 33 and forms 15.

Thus, in Fig. 13, the rightmost end of shield 46 is somewhat
elevated in relation to the leftmost end in order that
aperture 46a is maintained in a relatively horizontal position with respect to the print actuators in print mechanism
30. A few of the groups of print wires 33 are indicated at
a breakaway section of shield 46. As previously noted, the
print wires are reciprocated back and forth laterally in
relation to a form, not shown in Fig. 13, in order to effect
the printing of characters. The reciprocation is by means

22

of drive mechanisms activated from motor 76.  The activating signals for the actuators in print mechanisms 21 are supplied through cabling indicated at 73.

Actuator Block, Guide, and Actuators

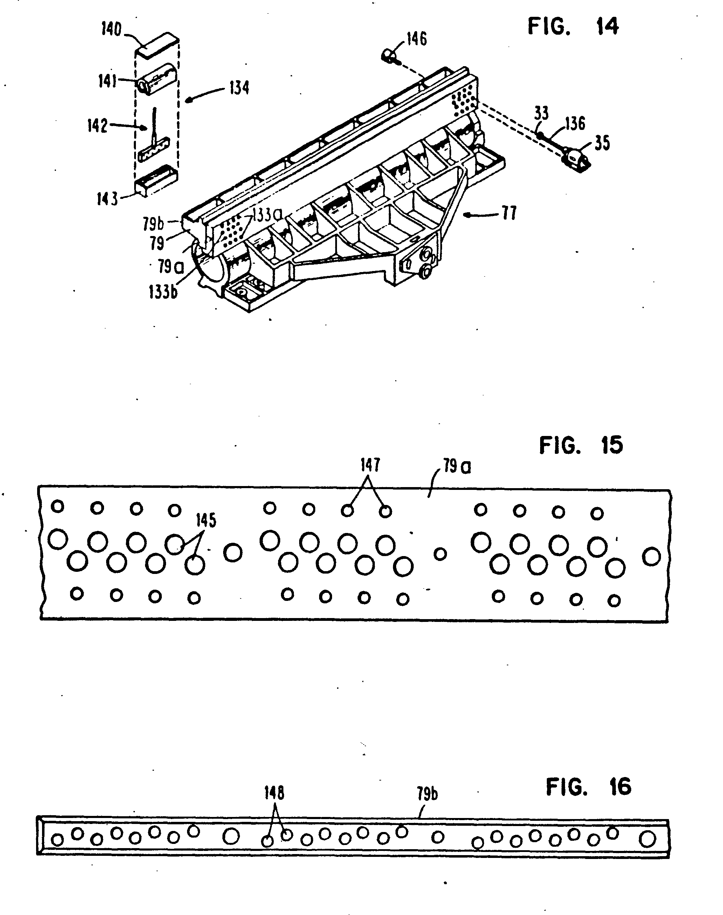

Enlarged views of the actuator block 77, guide 79, print wire actuators 35, lubricating assemblies 134, and various related mechanisms are shown in Figs. 14-23.  Referring to Fig. 14, this better illustrates the arrangement of apertures 133 in actuator block 77 which can accommodate eight print heads with eight print wire actuators.  Apertures 133a are used to mount actuators 35 while apertures 133b allow passage of barrels 136 of actuators 35 through actuator block 77 and guide 79 up to the print line. A typical lubricating assembly 134 comprises a cover 140, felt element 141, wick assembly 142, and housing 143 that contains lubricating oil.

Fig. 15 illustrates a portion of face 79a of guide 79 while Fig. 16 illustrates a portion of face 79b of guide 79. Barrels 136 of actuators 35 pass through apertures 145 on face 79a of guide 79 and are retained by bolts such as bolt 146 passing through apertures 147 from the opposite side of guide 79.  Individual actuator barrels 136 and print wires 33 project through apertures 148, Figs. 13 and 16.

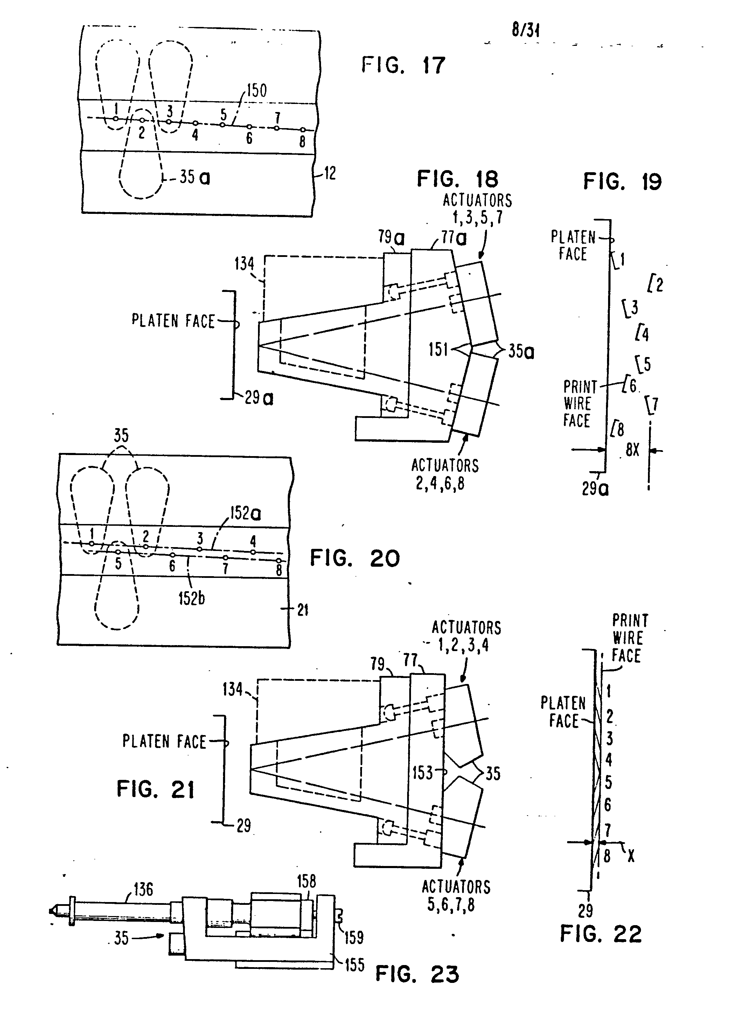

Figs. 17-22 illustrate several arrangements which permit mounting of a greater multiplicity of actuators in a given amount of space through actuator block 77 and guide 79. Figs. 17-19 illustrate one possible mounting arrangement for the actuators while Figs. 20-22 illustrate the actual mounting arrangement previously described in conjunction with Figs. 8, 13, and 14-16.

In Figs. 17-19 which represent an alternative mounting arrangement, print actuators 35a and print wires 35 for one print head set of eight (1-8) are arranged on a straight slope 150. This slope, combined with actuator block 77a having a double angle configuration at 151, Fig. 18, results in a staggered print wire face-to-platen condition, Fig. 19. This print wire face-to-platen distance, shown as 8X, is critical to both the stroke and flight time of the print wires.

The preferred arrangement, Figs. 20-22, has a number of attributes, including improved functioning, increased coil clearance, and ease of manufacture. In this method, print wires 35 arranged in a set 1-8 are mounted in two offset sloped subsets 152a and 152b forming a sloped serrated pattern. (See also Figs. 15 and 16.) Subset 151a includes print wires 1-4 of the set while subset 152b includes print wires 5-8. This, combined with a straight surface 153 on actuator block 77 and angled actuators 35, Fig. 21, represent an in-line print wire face-to-platen condition as in Fig. 22. The print wire face-to-platen condition as in Fig. 22. The print wire face-to-platen distance, shown as X, is at a minimum. This permits a higher printing rate and prevents wire breakage. The offset sloped print wire sets gives a greater clearance between wire positions which allows a larger actuator coil to be used.

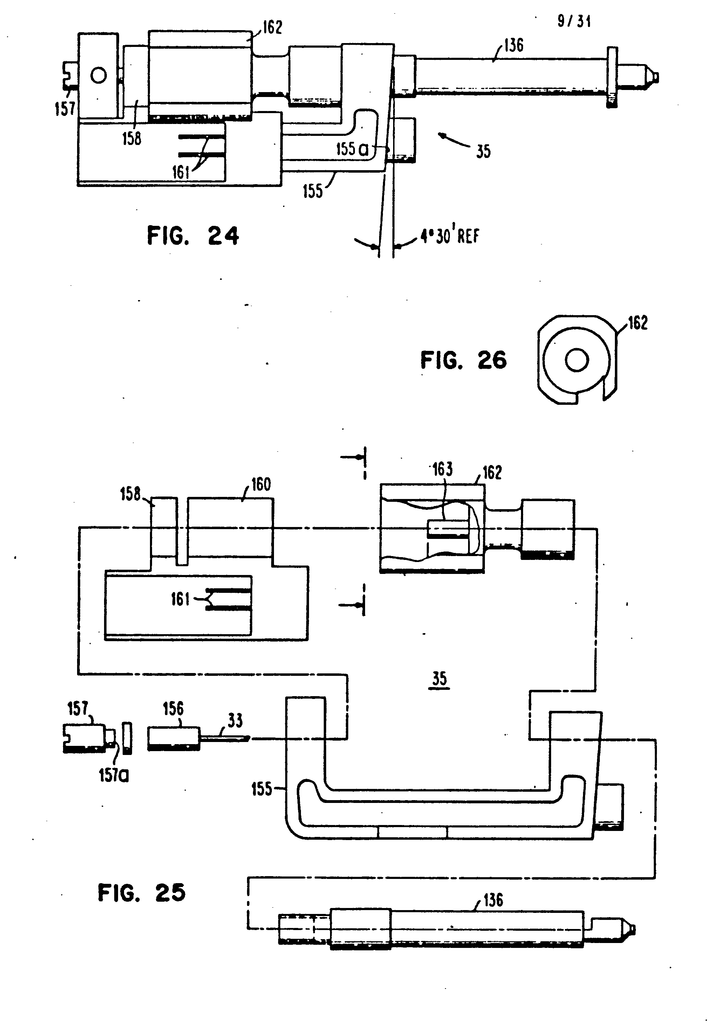

Use of a straight surface 153 instead of the double angle 151 facilitates manufacturing of the actuator block and thereby reduces cost. However, brackets 155 are still cut at an angle such as shown in Fig. 24. The angular relationships of the print actuators 35a with respect to the platen faces in Fig. 18 and print actuators 35 with respect to the platen face in Fig. 21 are somewhat larger than would be encountered in an actual implementation but they are shown this way to make the relationships easier to see. In contrast, an actual angular relationship might be smaller such as the $4^{\circ}$ 30' angle front face 155a on bracket 155 of actuator 35 in Fig. 24.

24

Figs. 23-26 illustrate a preferred form of actuator 35. A print wire is provided having an armature which is retained in home position by a permanent magnet. When printing of a dot is required, an electromagnet is energized which overcomes the magnetic forces of the permanent magnet and propels the print wire toward the paper.

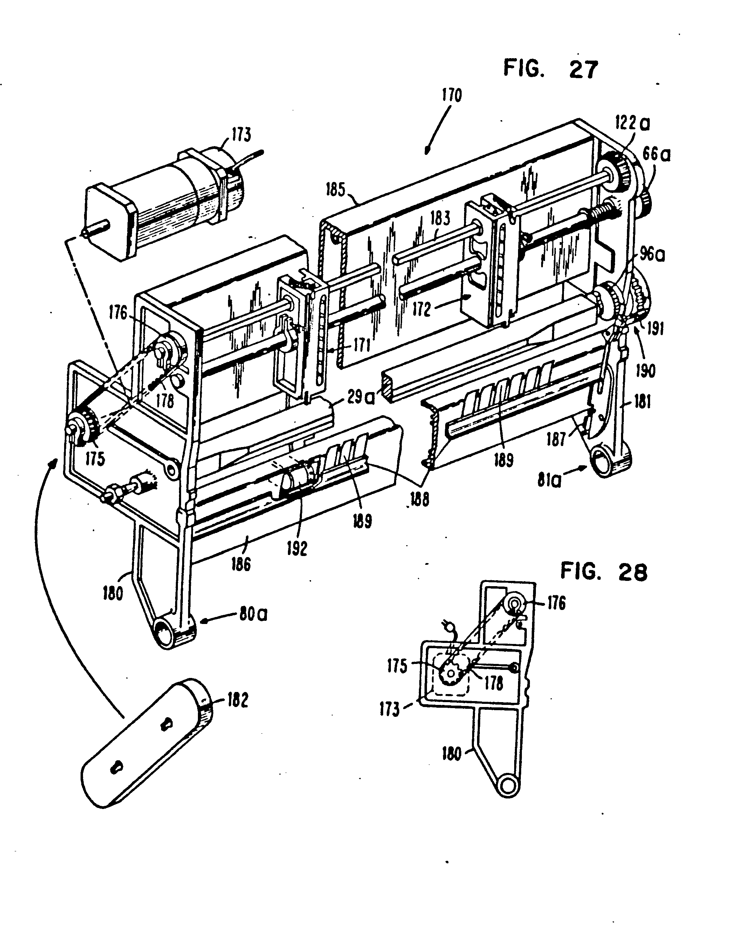

Fig. 23 illustrates one side elevation of the actuator, while Fig. 24 illustrates the opposite side elevation. The actuator comprises a number of elements arranged in a generally concentric manner on bracket 155. It is noted that Fig. 24 is somewhat enlarged relative to Fig. 23. Reference is also made to Figs. 25 and 26 for details of the individual components of the actuator. Also, it is noted that some slight structural differences appear between the actuator shown in Figs. 23-26 and those illustrated in Figs. 17-22, the actuators in Figs. 17-22 being more diagrammatically illustrated. The actuator includes a barrel 136 for supporting print wire 33 in proper relationship for printing when mounted in actuator block 77 and guide 79. Attached to the leftmost end of print wire 33 as viewed in Fig. 25 is an armature 156 which is arranged against a stop portion 156a of an adjustment screw 157 by forces exerted from a permanent magnet 158. A lock nut 159, Fig. 23, retains adjustment screw 157 in proper position. Thus, when not active, armature 156 and print wire 33 abut against stop 157a. When it is desired to actuate print wire 33, electromagnet 160 is rapidly impulsed from an external source by way of connectors 161. Energization of coil 160 overcomes the magnetic flux forces of permanent magnet 158 moving armature 156 and print wire 33 to the right as viewed in Fig. 25 thus causing the rightmost end of print wire 33 which is in proximity to the forms, to print a dot on the forms. A bobbin housing 162 is made of metallic substances to provide a shielding effect with respect to electromagnet 160. It is found that this has been beneficial when numerous print wire actuators are mounted in position on actuator block 77 and guide 79 since it prevents stray impulses from reacting from one actuator to another nearly actuator. This has proven to be extremely advantageous when multiple print actuators are provided as in the present printer. A core element 163 provides a forward stop location for armature 156 in readiness for restoration by permanent magnet 158 against stop 157a as soon as current is removed from coil 162.

Figure 26 is an end elevation of housing 162 along the lines 26-26 in Figure 25.

## Alternative Forms Feed Assembly

Figs. 27 and 28 illustrate an alternative single direction forms feed assembly 170 which feeds forms only in the upward direction as viewed in these figures. In contrast with the forms feed assembly previously described in conjunction with Fig. 8, this forms feed assembly has only a single upper set of tractors 171 and 172. A driving motor 173 provides driving force through gears 175 and 176 by way of timing belt 178. The various elements comprising the forms feed assembly are supported in a left end plate 180 and a right end plate 181. Fig. 28 is a left end elevation of the forms feed assembly 170 illustrating the positional relationships of motor 173, timing belt 178 and other elements. A cover plate 182 covers timing belt 178 during operations. Driving of the pin feeds on the two tractors 171 and 172 is analogous to the driving of the pin feeds for forms feed assembly 20 illustrated in Fig. 8 and previously described. In forms feed assembly 170, the tractor drive includes a drive shaft 183.

Lateral support for the forms feed assembly 170 is provided by an upper support 185 and a lower support 186. The assembly also includes a platen member 29a. Other elements such as knobs 1 and 22a, 66a, and 96a are analogous to their counterpart elements 122, 66, and 96 shown in Fig. 8. The

26

tractor mounts to the printer base casting 75 in Fig. 8 at pivot points 80a and 81a.

In place of the two lower tractors 92 and 93 in Fig. 8, this forms feed assembly includes a pressure drag assembly 188 with compliant fingers 189. These fingers exert physical pressure against the paper when in position against platen 29a and in the immediate vicinity of the printing station.

At the same time that forms feed assembly 170 is opened for insertion of new forms, the drag assembly 188 is also opened, but while the forms feed assembly moves toward the rear of the printer, the drag assembly moves toward the front. Spring element 187 enables drag assembly 188 to adjust to allow the forms to slide through when loading the forms. One additional cam element 190 cooperates with a follower 191 to provide adjustment of the pressure exerted by the drag assembly 188 on the paper for the purpose of accommodating various thicknesses of forms.

The assembly includes an End of Forms sprocket assembly 192 that could also serve to detect paper jams and that works in an analogous fashion to assembly 25 with sprocket 112 shown in Fig. 8.

Printing of Characters, Relationships of Print Wires, Character Locations and Emitters.

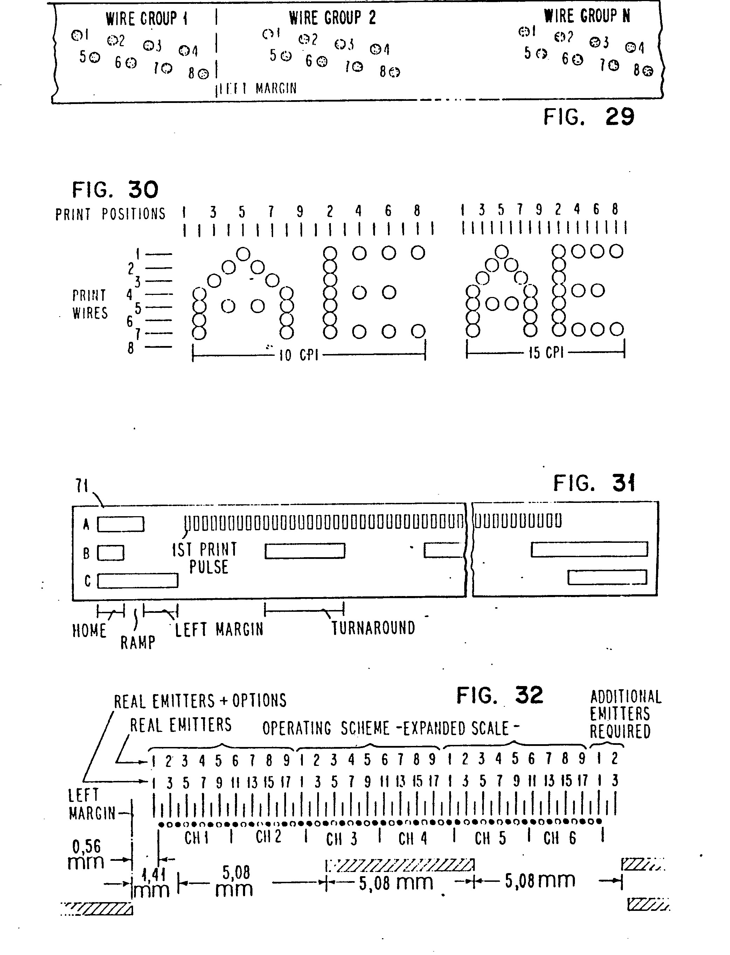

Characters that are printed are formed by printing dots on the paper. These dots are printed by wires that are mounted in groups of eight on a carrier bar that moves back and forth adjacent to the print line. Printing is bidirectional with complete lines of print formed right-to-left and left-to-right. See Figs. 29, 30, 33A and 33B.

A character is formed in a space that is eight dots high by nine dots wide. As shown in Fig. 30, two of the nine horizontal dot columns (1 and 9) are for spacing between characters. Any one wire can print a dot in four of the seven remaining horizontal dot positions (2 through 8). The printer can print 10 characters per inch or 15 characters per inch.

Most of the characters printed use the top seven wires in the group to print a character in a format (or matrix) that is seven dots high and seven dots wide. The eighth (bottom) wire is used for certain lower case characters, special characters, and underlining.

The number of print wire groups varies according to the printer model, and typically can be 2, 4, 6 or 8 groups. Printing speed increases with each additional wire group.

There are 16 character sets stored in the printer control unit. Any of these sets may be specified for use by the using system program.

Fig. 31 is a representation of the emitter glass 71 also shown in Figs. 7 and 8 and associated with the print mechanism 21. It has sections called "Ramp", "Home", and "Left Margin". These are coded sections, designated Track A, Track B, and Track C. Track B is sometimes referred to as the "Turnaround" track. "Home" is indicated by all three tracks being clear. "Ramp" is when Track A and Track C are clear, but Track B is opaque. "Left Margin" is when only Track C is clear, and Tracks A and B are opaque. Left Margin can be told from Right Margin because Track B is clear on Right Margin whereas Track B is opaque on Left Margin. For convenience, glass 71 is shown in a more normal representation with the left margin areas to the left and the right margin areas to the right. In actuality, the emitter glass 71 is physically located in the machine with the right-hand part in Fig. 31 toward the left and the left-hand part in Fig. 31 toward the right as viewed in

28

Figs. 7 and 8. This is due to the fact that the associated optical sensor 72 is physically located at the rightmost area of the strip when the print mechanism is in home position, and glass 71 actually is moved past the optical sensor assembly 72 from left to right as the print mechanism moves from left to right away from home position.

Fig. 32 illustrates the development of emitter pulses from the emitter strip 35 shown in Fig. 31, the signals being termed "real emitters" when actually sensed from Track A. "Option" emitters (sometimes referred to as "false" emitters) are developed electronically in the printer control unit. The use of emitter 70 in keeping track of printing location is described. The emitter tells the electronics when the wires are in a proper position to be fired to print the dots in correct locations. It essentially divides the print line into columnar segments, each one of which is available to the electronics to lay down a print dot. Track A, the basic track which controls the printing of dots has spacings of 0,56 mm. This corresponds to two print columns distance on the emitter in a normal print cycle and for ten characters per inch one option is inserted halfway in between.

Each emitter track actuates one pair of light emitting diode-photo transistor (LED-PTX) sensors within sensor assembly 72. Track A provides print initiation pulses, Track B provides turnaround information, and Track C indicates if the print heads are in either left or right margin.

If the line to be printed is shorter than the maximum print line length, typically 330,2 mm, then a signal for turnaround (reversal of print motor 76 direction) is given as soon as the last character has been printed. The motor now decelerates until it comes to a stop, and then immediately accelerates in the reverse direction until nominal speed is reached.

To keep track of the print head position, the number of emitters of Track A are counted. The A sensor keeps increasing the count regardless of whether the print assembly moves to the right or left. In order to indicate the true position of the print assembly, provision is made electronically to convert this count so that the count increases when the print assembly moves in one direction and the count decreases when moving in the opposite direction.

In order to accomplish this, Track B has been added. It is assumed that the print assembly is moving to the right. After the last character has been printed and the signal for turnaround has been given, the print assembly will continue to move to the right and the count will increase. However, as soon as the next transition has been reached on Track B, the count is frozen. The print head now comes to a stop and reverses. When it again passes the transition where the count was frozen, the emitter counts will now be subtracted and a true position indication is maintained by the counter for Track A.

The length of the Track B segments are chosen to be longer than the distance it takes the print head to come to a stop. The higher the print head speed and the longer the turnaround time, the longer must be the Track B segments. Thus, if the line is shorter than 132 characters at ten characters per inch, the carrier need not travel all the way to the right end of the print line. It may turn around soon after the printing is completed.

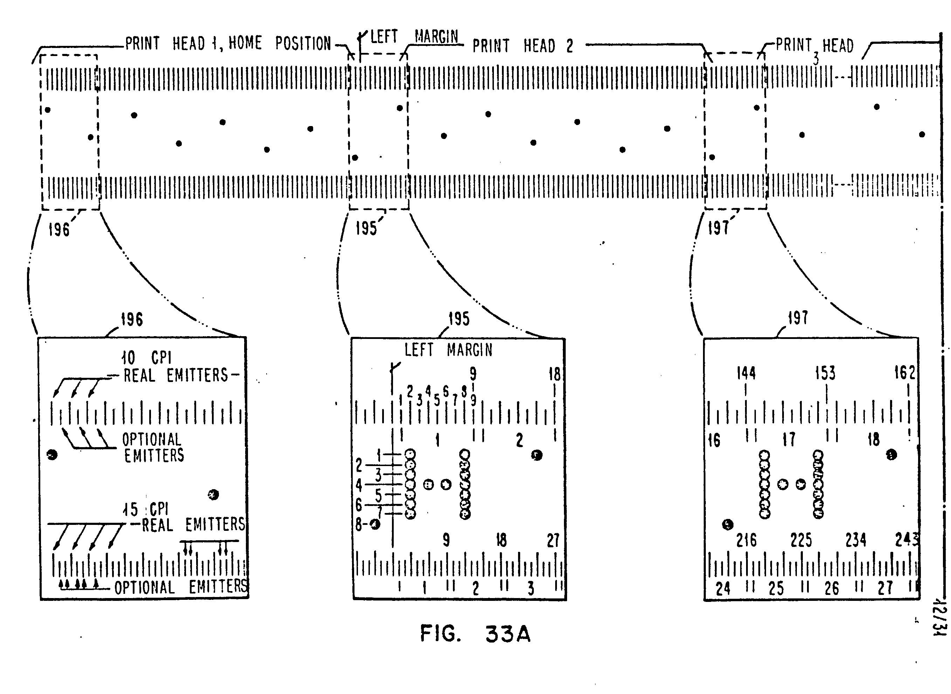

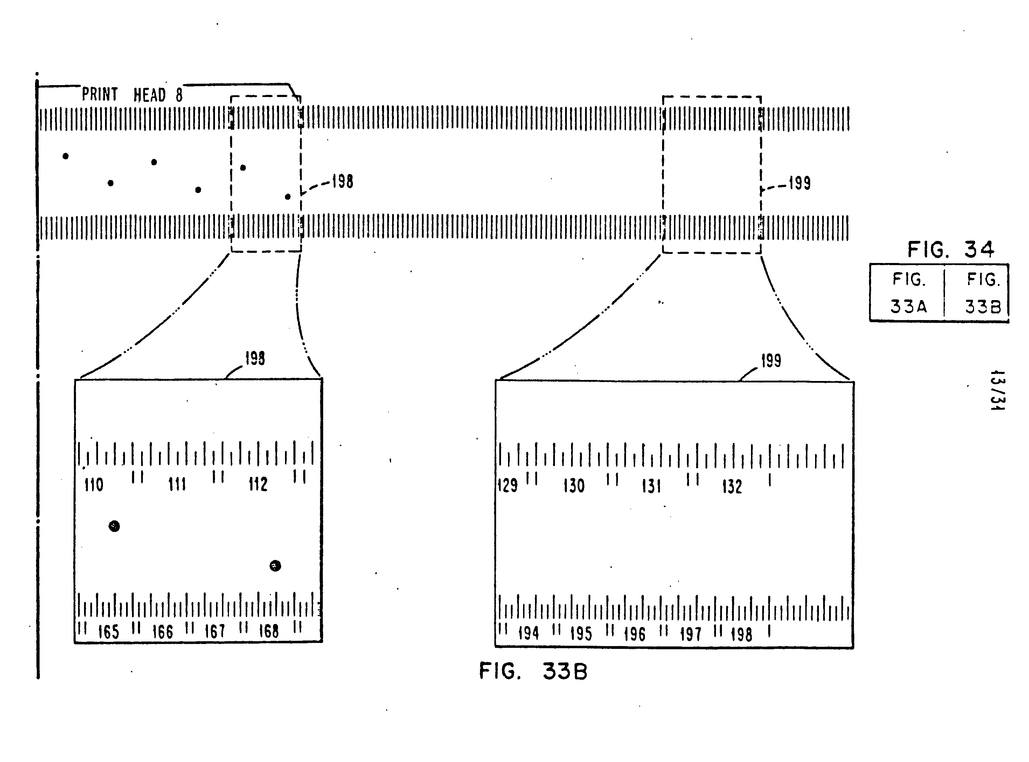

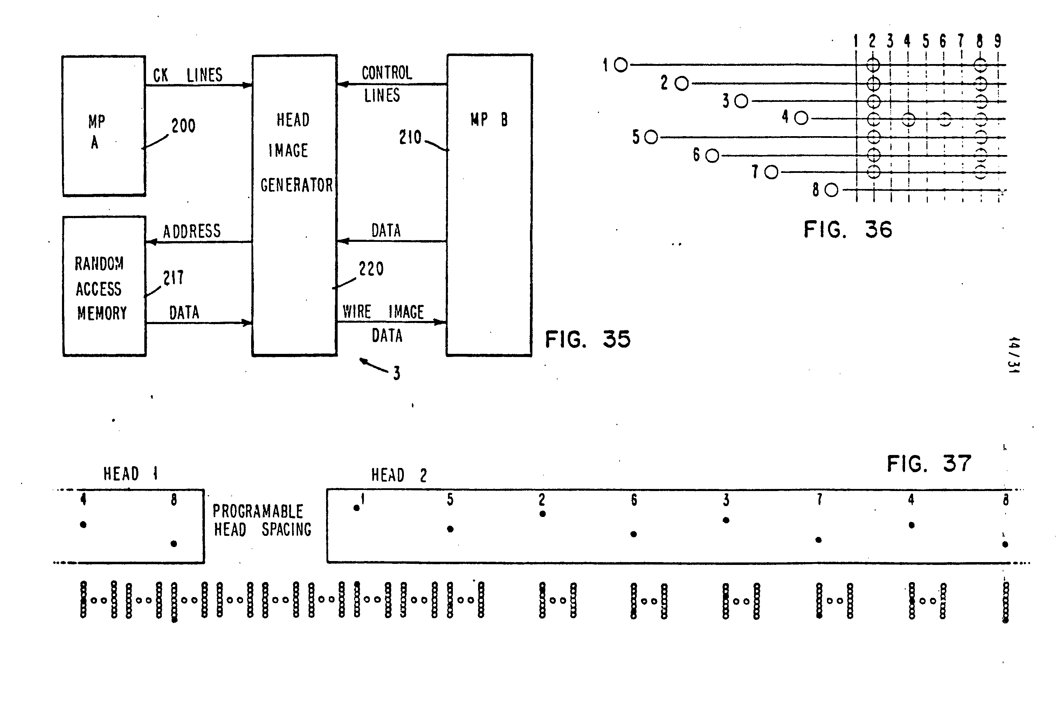

Figs. 33A and 33B, when arranged as shown in Fig. 34, comprise a diagram showing the physical relationship of the print heads when in the home position relative to character locations on a form to be printed. In addition, the emitter relationships are shown.

In Fig. 33A, print head 1, comprising eight print wires, is normally to the left of the nominal left margin when in home position. Print head 2 lies to the right of the left margin when the print assembly is in home position and the other print heads up to eight, as an example, are physically located at successively further positions to the right in relation to the form. The print wires are arranged in a sloped serrated pattern and are displaced two character positions apart horizontally, as shown in Fig. 37, and one dot location apart vertically. In order to print the character "H" as shown in inset 195, it is necessary that all of the print wires in print head 1 sweep past the "H" character location to effect printing of the individual dots. As each wire passes by and reaches the appropriate position for printing of its assigned dot locations in a vertical direction, it is fired. Thus, formation of characters takes place in a flowing or undulating fashion insofar as the printing of the dots is concerned. That is, an entire vertical column of dots as in the left-hand portion of the character "H" is not formed all at once but is formed in succession as the eight wires in print head 1 sweep past that column. This is true of the printing of all other character columns, as well. As a result of this, each print head is required to pass at least far enough so that all of the wires in that print head will be able to print both the first vertical column of dots in the first character required as well as the last column of dots in the last character to be printed in the group of character locations assigned to that print head.

Accordingly, print head 1, during printing movement of carrier 31, prints all of the characters that normally would appear underneath print head 2 when the print heads are in their home position. The printing of dots associated with print head 2 takes place under the home position for print head 3 and so on.

Inset 196 illustrates the relationship of real and optional emitters, sometimes referred to as "false" emitters, for both ten characters per inch and fifteen characters per inch. During the printing of characters at ten characters per inch, real emitters are found as indicated. These are physical real emitters derived from the emitter glass 71 as the print assembly sweeps from left to right or right to left during printing. The same real emitters are used for printing at fifteen characters per inch. However, when printing is at ten characters per inch, one additional (optional) emitter is necessary between each successive pair of real emitters to form the individual characters while, if characters are printed at fifteen characters per inch, two additional (optional) emitters are required between each successive pair of real emitters to handle the printing of dots for those characters.

Inset 197, Fig. 33A, illustrates the character locations associated with the rightmost print wire of print head 2 and the leftmost print wire of print head 3. Print heads 4-7 are not shown since the relations essentially repeat those shown with respect to print heads 1-3. The rightmost wires of print head 8 are shown in Inset 198, Fig. 33B. In addition, Inset 199 shows that for ten characters per inch, 132 characters can be accommodated in a full print line while for fifteen characters per inch, 198 characters are accommodated.

Fig. 35 is a highly diagrammatic block diagram of the general relationship of various system and control unit components including the two microprocessors 200 and 210 (also designated MPA and MPB), the Head Image Generator 220 and the random access memory 217 and indicates how the information is transferred that is generated by the Head Image Generator to print dots on the paper by actuation of the actuators.

Microprocessor 200 handles communications; microprocessor 210 handles the control of the subsystems. Microprocessor 200 sets up in memory 217 the count and the text buffer that is to be printed at a selected addressable location. The information is then passed over to microprocessor 210 or the buffer that is to be used. The count is passed to the Head Image Generator 220 and also the address in memory 217 which is the text buffer to be printed. Head Image Generator (HIG) 220, knowing the buffer to be printed, accesses memory 217 and defines the dots for the characters to be printed at each of the successive columns assigned to each print head as print carrier 31 moves during printing. HIG passes the data to the Control microprocessor 210 giving it all the dots to be printed at that particular time. This is represented in Fig. 37 which includes a portion of head 1 and all of head 2. Fig. 37 illustrates printing at ten characters per inch. A string of "H's" is assumed to require printing. The darkened dots of the "H's" represent the wires above them that will actually print that dot. For example, in print head 1, wire 4 prints the fourth dot down in the first column of the leftmost "H". This is the second slice of firing for that particular character with another three wire fires being required for wire 4 to complete the horizontal bar portion of the "H". The other seven wires in print head 1 fire at appropriate times to complete their assigned horizontal rows in that character. At head 2, wire 1 is over an "H"; there is no wire over the next "H"; and wire 5 is over the third "H". If printing was at fifteen characters per inch, there would be no wires over two characters between wires 1 and 5 of head 2, rather than just one character as illustrated.

The wire layout of "1 5 2 6 3 7 4 8" in Fig. 37 relates to the layout in Fig. 36 where it is shown how an "H" is laid out in relation to the actual wire slices.

Printer Attachment

The printer subsystems may be connected by an interface

33

cable to a controlling device (controller). The printer can be connected to the controlling device itself, or to another printer (or work station unit) with additional cabling.

## Controlling Device

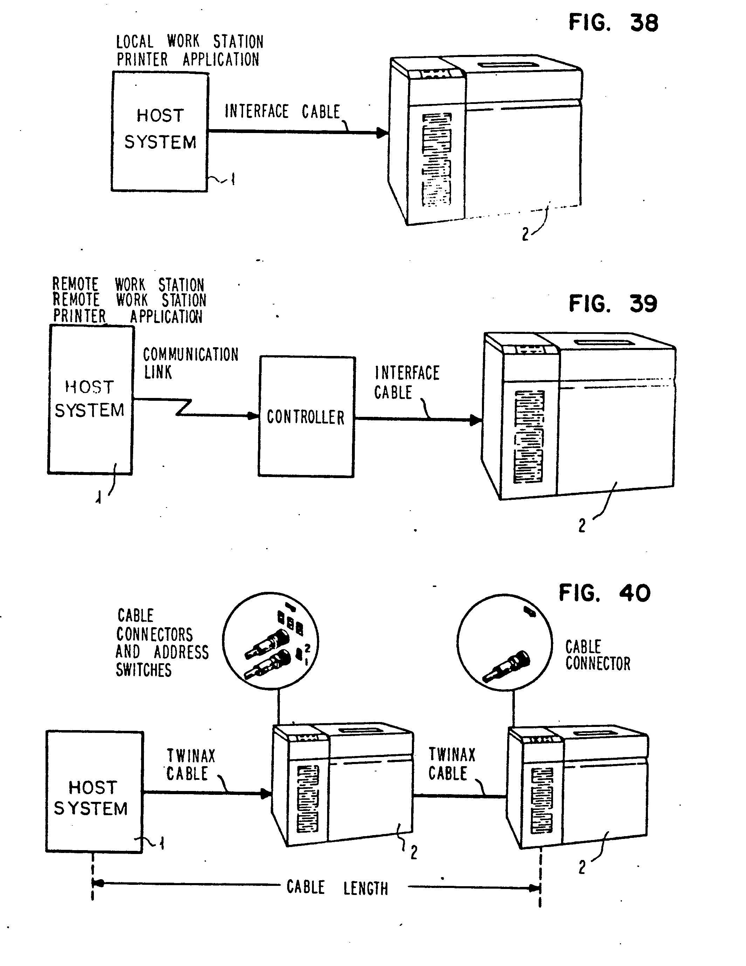

The controlling device to which the printer subsystem is attached may be a host computer system, Fig. 38, or a controller at a remote work station, Fig. 39. In either case, all information transfers (exchanges) between the controlling device and the printer control unit are started from the controlling device by a command. Information transfers ordinarily are not initiated by the printer.

In some applications, the printer subsystem may be directly connected to a host computer system, as in Fig. 38. In such applications, all commands (operational and formatting) are supplied by the computer, along with the data to be printed. Responses from the printer are sent directly to the computer from the printer control unit.

In other applications, Fig. 39, the printer subsystem may be connected to a work station controller, which in turn is remotely connected to a host computer system by a communications network - such as Systems Network Architecture/ Synchronous Data Link Control (SNA/SDLC). In such applications, information (data) to be printed and printer formatting commands are transferred from the computer system to the work station controller. The work station controller then generates the operational commands and transfers all this information to the printer. Responses from the printer are sent to the work station controller then to the computer system by the communications network.

## Cable Through Connector

The Cable Through Connector feature, Fig. 40, connects multiple printers or other work station units on the same

34

interface cable line to the system or controller.

Units with this feature have address-setting switches and an additional cable connector. The customer assigns a unique address to each unit on the cable connector line and sets the address switches at installation time. The feature is not needed on the last unit on the line. The number of units that can be connected to the same line depends on the capability of the controlling device.

With this feature, the maximum cable length restriction is from the controlling device to the last unit on the line.

Audible Alarm

The optional alarm produces a tone that alerts the operator to conditions that require operator attention.

Interface Cable

The interface cable may be either coaxial or twinaxial. Representative maximum cable lengths from the controller to the last device on the interface are:

       Coaxial cable    -      610 m
       Twinaxial cable -     1525 m

The type of cable selected depends on the requirements of the controlling device to which the printer subsystem is attached.

Information Transfer
Data Stream

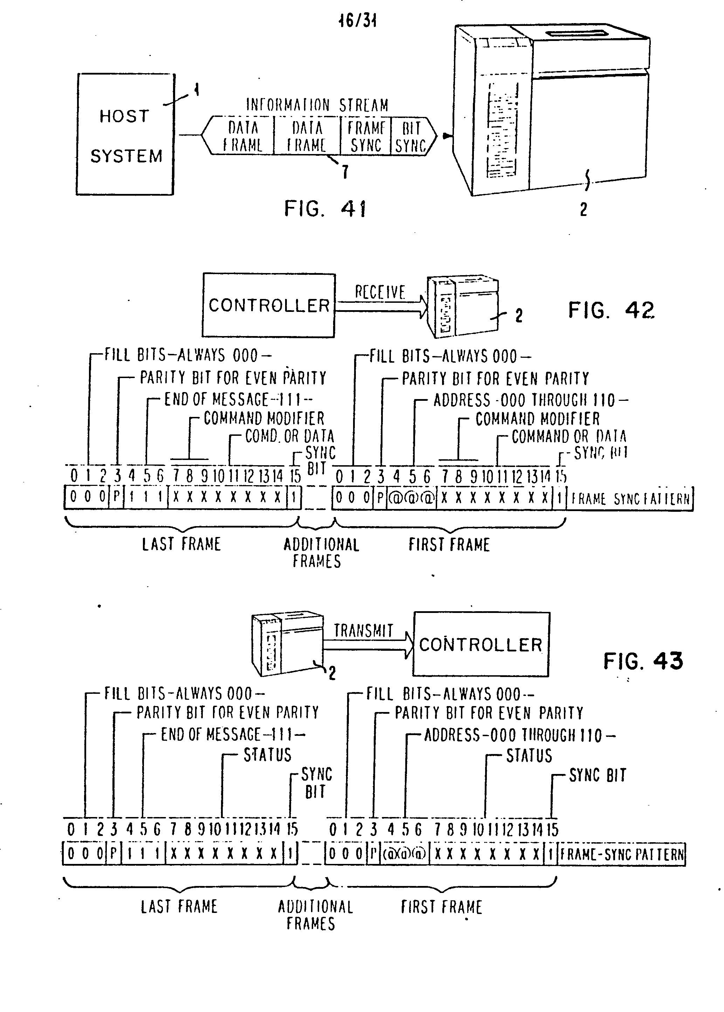

All information transferred between the controlling device and the printer subsystem is in the form of a serial "stream" of information bits, Figs. 41. Contained in this stream are:

35

Bit synchronization patterns
Frame synchronization patterns
Data frames

The bit and frame synchronization (sync) patterns establish timing control between the controlling device and the printer. The data frame is the unit of information used to transfer all commands, data to be printed, and status information.

The data stream can flow in either direction on the interface cable - but only in one direction at a time (half-duplex). The controlling device always initiates the data stream flow for either direction. Only one device on the interface can be communicating with the controlling device at a time.

The data stream flows on the interface for each transfer of single or multiple frames of information. The cable carries no signal between information transfers.

In a typical information transfer from controller to printer, the information stream may be a mixture of operational commands, formatting commands, and data to be printed. Blocks of up to 256 frames may be included in the information stream for a given transfer.

The information stream for any information transfer always begins with the bit-sync and frame-sync patterns, and ends with an end-of-message code in the last frame of the sequence. The end-of-message code causes turnaround on the cable, allowing status information to be transferred in the opposite direction on the cable on the next sequence.

Information Frame

The basic unit of information transfer is a 16-bit information frame. The information frame is used for transferring

36

all commands, data, and status information between the controlling device and the printer. A Receive mode from controller to printer is illustrated in Fig. 42 and a Transmit mode from printer to controller is illustrated in Fig. 43.

The 16 bits of the information frame are assigned the following significance: Bits 0 through 2, the fill bits, always 000, are for timing control. Bit 3, the parity bit, is set to maintain an even bit count (even parity) in each frame.

Bits 4, 5, and 6 are the address bits for selecting a specific printer (or other work station unit) attached to the interface. Up to seven units can be addressed by combinations of these bits (000 through 110 are valid addresses). A bit combination of 111 indicates an end-of-message and causes line turnaround.

Bits 7 through 14 are for commands, data or status information. Bit 15, always on, is a synchronization bit.

Printer Addressing

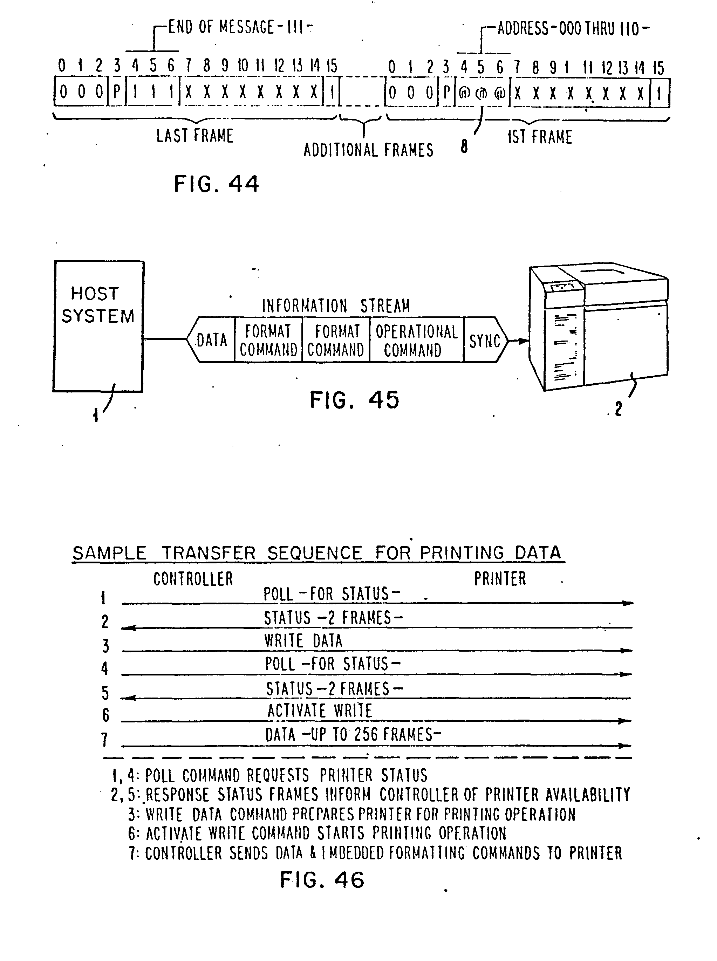

Printer addresses are coded in bits 4, 5, and 6 of the information frame, Fig. 44. The address for a single printer on the interface cable is 000. With the Cable Connector feature, addresses can range from 000 through 110. Addresses of printers attached with the Cable Connector feature are set with switches by the customer. A bit combination of 111 is used as an end-of-message indicator in the last frame of a transfer sequence and, therefore, cannot be used as a valid address.

The first frame following any signal turnaround on the cable is a command frame containing a valid printer address (000 through 110) for selecting a specific printer on the interface cable. Each successive frame following a command frame is then checked for the end-of-message code (111).

All response frames from the printer to the controlling device, except the end-of-message frame, contain the address of the selected printer.

Printer Responses

All information transfers between the controlling device and the printer are initiated from the controlling device by command frames. The printer, however, does transfer information to the controller on request. These transfers are called printer "responses".

In general, printer response frames are requested by the controller to determine the readiness (or "status") of a printer for accepting data from the controller. A variety of printer operational and error conditions are reported to the controller by means of printer response frames. These conditions are described in detail in the section below entitled "Status and error Information".

Printer Control Unit

The printer control unit 3 (See Figs. 1 and 35, as examples) connects the printer to the interface cable from the controlling device, controls the flow of information to and from the controlling device and controls all internal printer functions.

When data is received for printing, the printer control unit formats the data into print lines, using formatting commands (control codes) embedded in the data stream. Two print-line format buffers are used so one line can be printed while the next line is being formatted. This comprises a "lookahead" function which allows bidirectional printing for maximum throughput.

38

## Information Codes

All 256 8-bit codes of the Extended Binary Coded Decimal
Interchange Code (EBCDIC) are recognized by the printer
control unit.  In a data stream hexadecimal codes of 00
through 3F represent formatting commands, 40 through FE
represent data (FF is always a blank character.)

All of these codes may be used to represent characters.

## Operational Commands

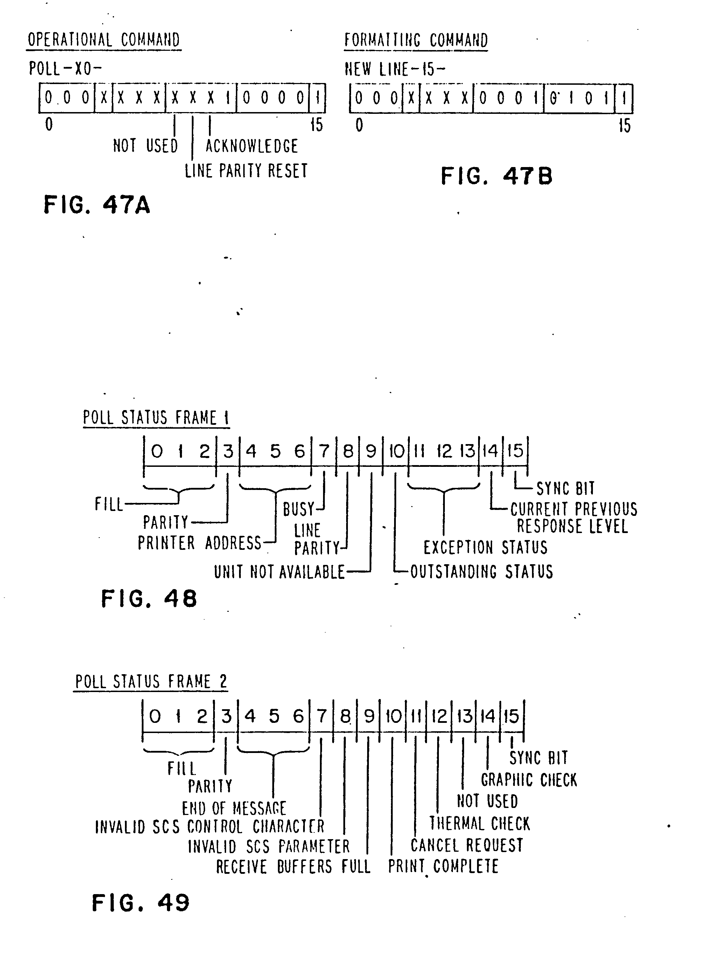

Operational commands, listed in Table I below, determine the
printer function to be performed, such as Write Data, Read
Status, etc. (also, see Figs. 45 and 47A).  Fig. 47A illustrates a representative operational command:"Poll."  Some
operational commands require an additional command or data
frame. In these cases, the next frame transmitted must
contain that command or data frame.  Operational commands
are embedded in the data stream wherever required for proper
control of the printer.

## Operational Command Sequence

The diagram in Fig. 46 illustrates a representative sequence
of events between a controlling unit and the printer subsystem to effect printing of data.

39

TABLE I

OPERATIONAL COMMAND SUMMARY

| Command Name | Hex Code* | Function |
|---|---|---|
| Poll | X0 | Poll causes a one-frame status response from the printer until a Set Mode command is issued; thereafter, Poll initiates a two-frame status response. Bit 8 set to 1 resets line parity error indication. Bit 9 notifies the printer to send current status frames. |
| Read Device ID | 0C | Initiates the transfer of the ID (Identifier) frame from the printer to the controlling device. Must be followed by an Activate Read command. |
| Read Status | 88 | Initiates the transfer of one frame of outstanding status from the printer. Must be followed by an Activate Read Command. |
| Activate Read | 00 | Required to complete Read Device ID or Read Status operations. This command signals the hardware that data is to start a transfer and is not placed in the command queue. |
| Write Data | 1E | Causes the printer to store all data frames after the Activate Write. |

40

TABLE I -continued-

| | | |
|---|---|---|
| Activate Write | 01 | Causes printing of data frames that follow this command. This command signals the hardware that data is to start a transfer. This is not placed in the command queue. |
| Write Control Data | 05 | Resets exception or outstanding status. |
| Set Mode | 13 | Must be issued before the printer accepts any other command except Poll and Reset. Followed by a data frame that defines the interval between frames. |
| Reset | 02 | Resets printer to a power-on reset condition. |
| Clear | 12 | Clears all print data buffers. |
| End-of-Queue (EOQ) | 62 | Marks end of command queue loading. |

\* *Bits 7 through 14 of a data frame*

Formatting Commands
Formatting Command Function

Formatting commands, shown in Table II below, control forms movement and line length. They are embedded in the information stream that follows the Write Data command, Fig. 45. Also, See Fig. 47B which illustrates a representative

41

formatting command: "New Line."

Some formatting commands require more than one frame.  A
code in the first frame identifies multiple frame commands.
In some cases the code in the second or third frame further
defines the total number of frames to be used.  The formatting command codes are also referred to as "standard character string" (SCS) codes.  SCS is an SNA control-character
subset.

TABLE II

FORMATTING COMMAND SUMMARY

| Command Name and Abbreviation | Frame Sequence (Hex Code/Parameter) | | | | | | Description |
|---|---|---|---|---|---|---|---|
| | 1 | 2 | 3 | 4 | 5 | 6 | |
| Null (NUL) | 00 | | | | | | No Operation performed. |
| Carriage Return | 0D | | | | | | Moves the print position to the first position of the current line. |
| New Line | 15 | | | | | | Moves the print position to the first position of the next line. |
| Interchange Record Separator (IRS) | 1E | | | | | | Same as New Line. |

42

TABLE II - continued -

FORMATTING COMMAND SUMMARY

| Command Name and Abbreviation | Frame Sequence (Hex Code/Parameter) | | | | | | Description |
|---|---|---|---|---|---|---|---|
| | 1 | 2 | 3 | 4 | 5 | 6 | |
| Line Feed (LF) | 25 | | | | | | Moves the print position to the same horizontal position of the next line. |
| Form Feed (FF) | 0C | | | | | | Moves the print position to the first position of the next page. |
| Bell (BEL) | 2F | | | | | | Turns off Ready, turns on Attention and the audible alarm, and stops printing. |
| Absolute Horizontal Position (AH) | 34 | CO | NN | | | | Moves the print position to the horizontal position specified in the parameter frame. The parameter frame NN immediately follows the AH command. |

TABLE II - continued -

FORMATTING COMMAND SUMMARY

| Command Name and Abbreviation | Frame Sequence (Hex Code/Parameter) 1 2 3 4 5 6 | | | | | | Description |
|---|---|---|---|---|---|---|---|
| Absolute Vertical Position (AV) | 34 | C4 | NN | | | | Moves the print position specified in the parameter frame. The parameter frame NN immediately follows the AV command. |
| Relative Horizontal Print Position (RH) | 34 | C8 | NN | | | | Moves the print position horizontally towards the end of the line from the current print position the number of columns specified in the parameter frame. The parameter frame NN immediately follows the RH command frame. |
| Relative Vertical Print Position (RV) | 34 | 4C | NN | | | | Moves the print position vertically towards the bottom of the page from the current print position the number |

TABLE II - continued -

FORMATTING COMMAND SUMMARY

| Command Name and Abbreviation | Frame Sequence (Hex Code/Parameter) | | | | | | Description |
|---|---|---|---|---|---|---|---|
| | 1 | 2 | 3 | 4 | 5 | 6 | |
| | | | | | | | of lines speci- fied in the para- meter frame. The parameter frame NN immediately follows the RV command frame. |
| Set Horizontal Format (SHF) | 2B | C1 | NN | HH | | | Sets the print line length to the value speci- fied in the parameter frames. The parameter frames NN and HH immediately fol- low the C1 com- mand frame. |
| Set Vertical Format (SVF) | 2B | C2 | NN | VV | | | Sets the page length to the value specified in the parameter frames. The parameter frames NN and VV immedi- ately follow the C2 command frame. |

TABLE II - continued -

FORMATTING COMMAND SUMMARY

| Command Name and Abbreviation | Frame Sequence (Hex Code/Parameter) | | | | | | Description |
|---|---|---|---|---|---|---|---|
| | 1 | 2 | 3 | 4 | 5 | 6 | |
| Set Graphic Error Action (SGEA) | 2B | C8 | NN | GG | UU | | Sets the unprintable character option and defines the default graphic that is specified in the parameter frames. The parameter frames NN, GG, and UU immediately follow the C8 command frame. |
| Transparent (TRN) | 35 | NN | | | | | Permits the codes normally used as control characters to be used as printable characters. The parameter frame NN specifies the number of frames that follows the 35 command frame. |
| Subscript (SBS) *Not available for single direction paper feed;* | 38 | | | | | | Line feeds 1,41 mm to print subscript characters. |

46

TABLE II - continued -

FORMATTING COMMAND SUMMARY

| Command Name and Abbreviation | Frame Sequence (Hex Code/Parameter) | | | | | | Description |
|---|---|---|---|---|---|---|---|
| | 1 | 2 | 3 | 4 | 5 | 6 | |
| Superscript (SBS) *Not available for single direction paper feed.* | 09 | | | | | | Reverse line feeds down 1,41 mm to print superscript characters. |
| Set Character Distance (SCD) | 2B | D2 | 04 | 29 | P1 | P2 | Sets the charac-acter density to 10 or 15 characters per inch as specified in the P1 and P2 para-meter frames. |
| Set Baseline Increment (SBI) *Not available for single direction paper feed;* | 2B | D2 | 04 | 15 | P1 | P2 | Sets the depth of one line of print to 0,176 mm |
| Set CGCS through Local ID (SCL) *CGCS - Coded Graphic Character Set* | 2B | D1 | 03 | 81 | P1 | | Loads 1 of 16 graphic charac-acter sets speci-fied in the P1 parameter frame. |

TABLE II - continued -

FORMATTING COMMAND SUMMARY

| Command Name and Abbreviation | Frame Sequence (Hex Code/Parameter) | | | | | | Description |
|---|---|---|---|---|---|---|---|
| | 1 | 2 | 3 | 4 | 5 | 6 | |
| Absolute Move Baseline (AMB) *Not available for single direction paper feed* | 2B | D3 | 04 | D2 | P1 | P2 | Moves the print position forward in the vertical direction from the current print position to the new print position specified in the P1 and P2 parameter frames. |
| Relative Move Baseline (RMB) *Not available for single direction paper feed.* | 2B | D3 | 04 | D4 | P1 | P2 | Moves the print position forward or backward in the vertical direction from the current print position to the new print position specified in the P1 and P2 parameter frames. |
| Load Alternate Characters (LAC) | 2B | FE | NN | MM | | | Data allows customer designed fonts or characters to be loaded for printing. |

48

TABLE II - continued -

FORMATTING COMMAND SUMMARY

| Command Name and Abbreviation | Frame Sequence (Hex Code/Parameter) | | | | | | Description |
|---|---|---|---|---|---|---|---|
| | 1 | 2 | 3 | 4 | 5 | 6 | |
| Set Line Density (SLD) | 2B | C6 | NN | P1 | | | Selects vertical line density of 6 or 8 lines per inch or any distance in multiples of 25,4mm/72 or 0,35 mm up to 255. |

Status and Error Information
Poll Response Frames

Following a power-on reset (POR), the printer subsystem responds to controller polling with a single status frame, Fig. 48. The printer continues to respond to controller polling with a single status frame until the printer receives a Set Mode command.

After receiving a Set Mode command, the printer responds to polling with two status frames, the second of which is shown in Fig. 49.

Status information described in frame 1, Fig. 48, is the same in either case.

Bits 0, 1, 2 Fill .

These bits are always set to 000 and are used for timing control.

Bit 3 -Parity.

This bit is used to maintain an even bit count (even parity).

Bits 4, 5, 6 - Printer address.

These bits are used for selecting a specific printer attached to the interface. Up to seven printers can be addressed by the combinations (000 through 110). A bit combination of 111 indicates an end-of-message and causes line turnaround.

Bit 7 - Busy.

0 = Not busy when operational command queue is empty.
1 = Busy when operational command queue is not empty or an activate command is received.

Bit 8 - Line parity.

0 = No line parity error is detected in a received frame.
1 = Line parity error is detected in a received frame.

Bit 9 - Unit not available.

0 = Unit available (the Ready light is on).
1 = Unit not available.

Bit 10 - Outstanding status.

0 = No outstanding status.
1 = Outstanding status (available by using the Read status command).

Bits 11, 12, and 13 indicate a variety of exception status conditions. Until the exception status is reset, only Poll,

50

Set Mode, and Reset commands are processed. The Write Control Data Command (if the exception status is not power-on transition) is also processed. The power-on transition exception status is reset by the Set Mode command. The exception status conditions are reset by the Write Control command (see "Write Control Data").

| Bit 11 | Bit 12 | Bit 13 | Meaning |
|---|---|---|---|
| 0 | 0 | 0 | No exception status exists. |
| 0 | 0 | 0 | Activate lost - caused by a line parity error following a Write Data, Read Status, or Read Device ID. |
| 0 | 1 | 0 | Invalid activate command - caused when a Write Activate follows a Read Status or Read Device ID or, a Read Activate following a Write Data. |
| 0 | 1 | 1 | Reserved. |
| 1 | 0 | 0 | Invalid command - caused when a command is outside the operational command set or more than 240 microsecond interframe interval has been specified. |
| 1 | 0 | 1 | Input queue or input buffer overrun - caused when more than 16 commands and associated data frames or more than 256 data frames have been sent. |
| 1 | 1 | 1 | Power-on transition-causes only status frame 1 to be sent in response to a Poll command. |

51

Bit 14 - Current/Previous response level.

When bit 14 goes from 0 to 1 or 1 to 0, the using system determines that the response frame is current status. When bit 14 is unchanged from the previous response, the using system determines that the response frame is previous status. Any change in the response frame changes bit 14 from its previous state. Bit 14 is set to 0 after power-on.

Bit 15 - Sync.

A synchronization bit that is always set to Frame 2 contains information shown in Fig. 49.

Bit 0 through 6 - Same as Poll status frame 1.

Bit 7 - Invalid SCS (Standard Character String) control

0 = No Invalid SCS Control Code is detected.
1 = Invalid SCS Control Code is detected.
Reset by a Reset or Clear command.

Bit 8 - Invalid SCS (standard character string) parameter

0 = No Invalid SCS parameter is detected. 1 = Invalid SCS parameter is detected.
Reset by a Reset or Clear command.

Bit 9 - Receive buffers full.

Used by the using system to determine when data can be sent to the printer.

0 = Receive buffers are not full.
1 = Receive buffers are full.

52

## Bit 10 - Print complete.

The print complete bit is set to 0 when the printer detects an Active Write command. The print complete bit is set to 1 by Power-on reset, a Clear command, a Reset command, or when all input data is printed.

0 = Printing is in progress.
1 = Printing is completed.

## Bit 11 - Cancel Request.

The Cancel request bit is set to 1 when the operator presses the Cancel key on the Operator Panel. This bit is reset by the next Poll command (with Acknowledge bit set to 1), a Reset or Power-On reset.

0 = No cancel request.
1 = Cancel request.

## Bit 12 - Not used.

## Bit 13 - Not used.

## Bit 14 - Graphic check.

This bit is set to 1 indicates that an undefined character has been detected in the data stream. This bit is reset by the next Poll command (with Acknowledge bit set to 1), a Reset or Power-On reset.

0 = No graphic error is detected.
1 = Graphic error is detected.

## Bit 15 - Same as Poll status frame 1.

## Read Status Response Frame

One response frame is sent for every Read Status command.

53

The response frame, sent only after the Activate Read command is received, contains a hex code that defines the status condition within the printer.

The hex code corresponds to the last two digits of the error code that may be available as a system error message (depending on the using system). The first digits of these hex codes are also automatically displayed on the printer operator panel 26 when the error occurs.

The defined conditions are:

| Hex Code | Error Condition |
|---|---|
| 11 | Printer controller error |
| 12 | Cable adapter error |
| 31 | Head drive problem |
| 32 | Margin emitter not detected |
| 34 | Turnaround emitter not detected |
| 35 | Print emitter not detected |
| 36 | Head busy (cannot be reset) |
| 37 | Printer control unit |
| 38 | Overcurrent |
| 41 | Forms drive problem (undetermined area) |
| 42 | Forms busy (cannot be reset) |
| 43 | Forms emitter B not detected |
| 44 | Forms emitter A not detected |
| 45 | Run latch failure (printer control unit) |
| 46 | Printer control unit |
| 47 | Overcurrent |
| 48 | Emitter sequence wrong |
| 80 | Ribbon jam |
| 81 | Ribbon jam (diagnostic mode) |
| 82 | Ribbon problem |
| 83 | Head Image Generator error |

## Printer General Block Diagram

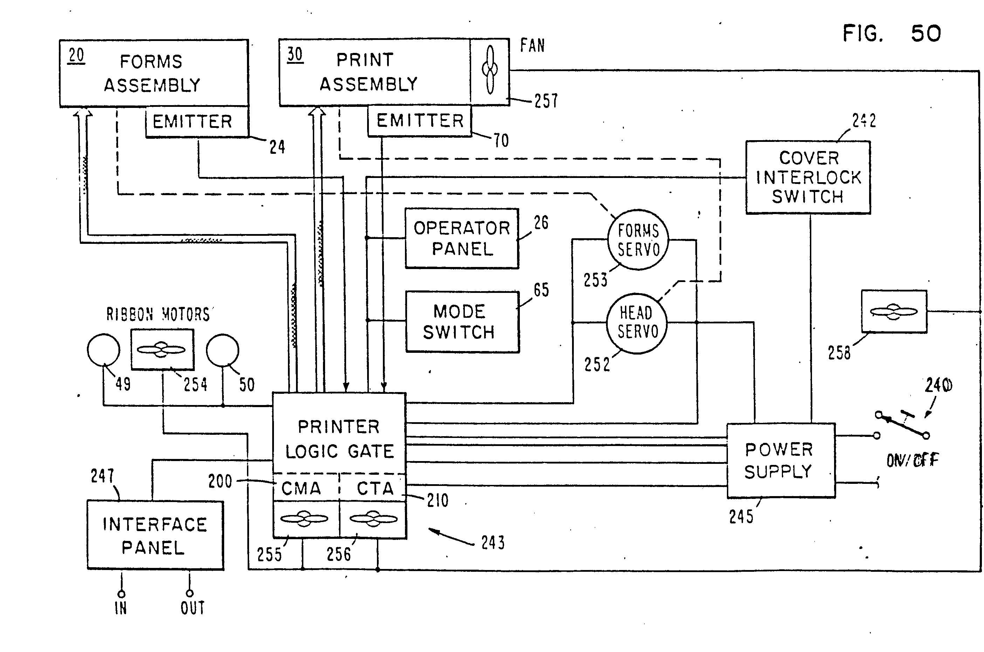

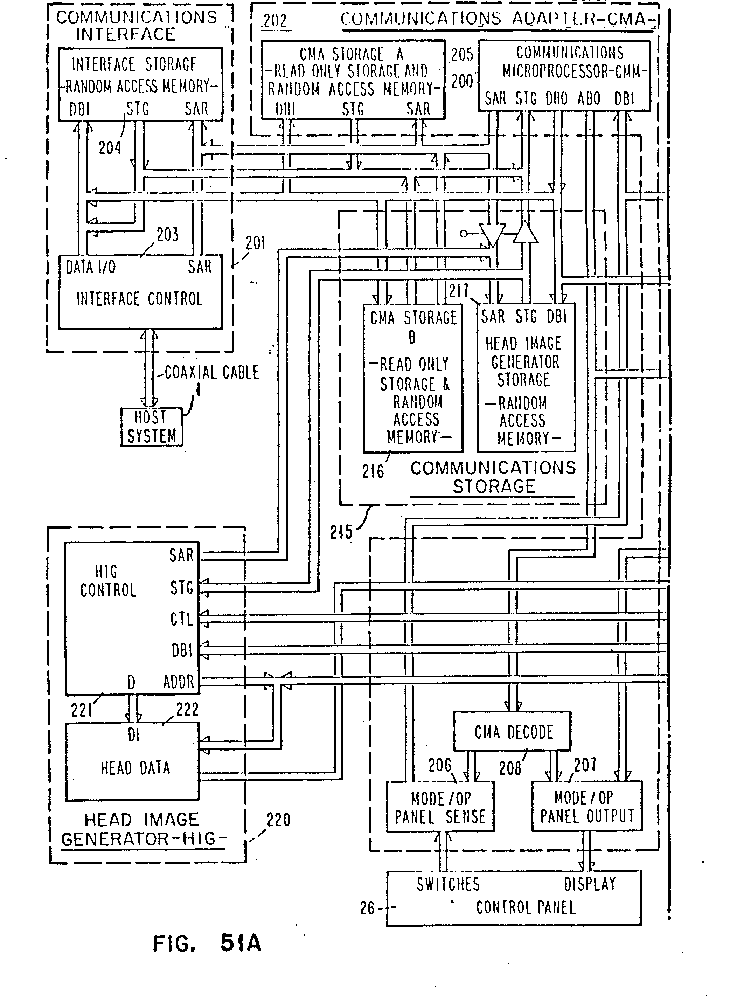

Fig. 50 illustrates various printer blocks of interest. A power supply 245 supplies the unit with all the power to drive and to control. The on/off switch 240 controls power supply 245 being on and off. From the power supply the cover interlock switch 242 enables and disables the 48-volt drive which controls much of the printer logic 243. Logic 243, once enabled, looks at operator panel 26 for information as to the operations to be performed. Mode switch 65 tells the logic which type of operation in testing procedures should be run. Print assembly 30 is controlled by the printer logic along with the forms assembly 20. Emitter devices 24 and 70 supply positional information to the printer logic. The printer logic also controls and talks with the interface panel 247 and passes information on the other parts of the printer. The ribbon motors 49 and 50 are controlled in an on/off fashion by printer logic 243 which accepts inputs from the ribbon assembly to determine when the end of ribbon has occurred. Head servo 252 is a control block that insures that the print head is in the proper position at the proper time for the actuators to fire. Forms servo 253 is a control block that moves the forms to desired locations. Fans 254-258 are used to control temperature within the machine. As indicated in connection with Fig. 35, printer logic 243 includes two microprocessor adapter blocks 200 and 210. The first one included is the Communications adapter CMA which accepts input and passes it to the second one which is the Control adapter CTA that actually controls the printer. These will be discussed in connection with Figs. 51A and 51B.

## Microprocessor Control - Printer Subsystem

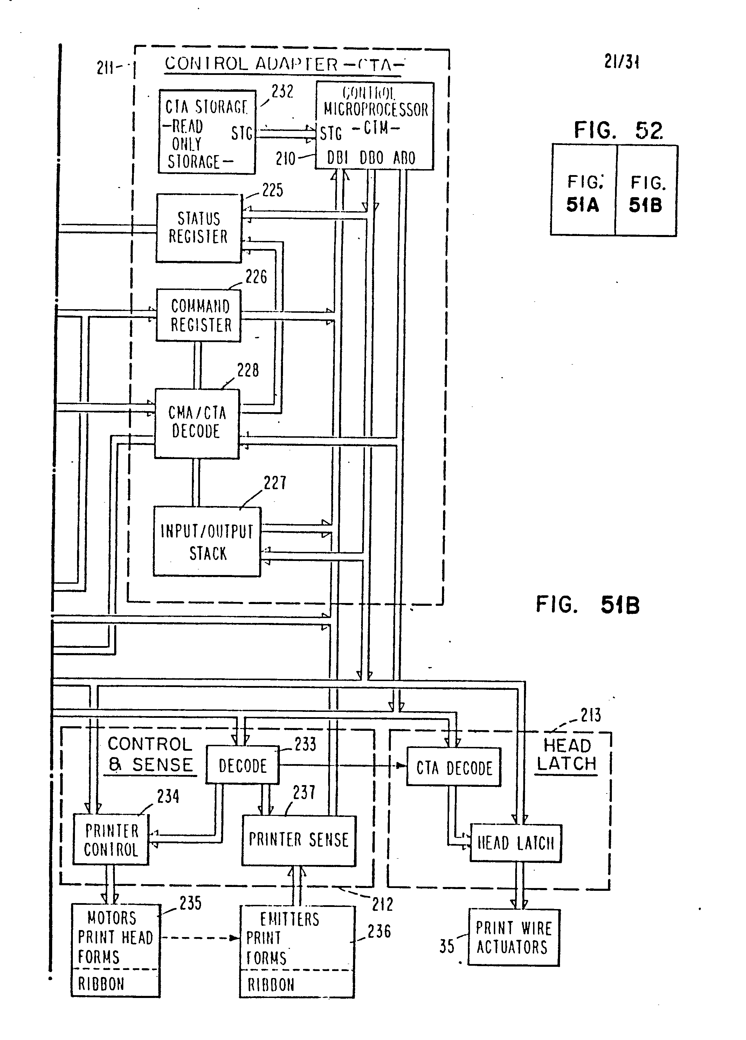

Two microprocessors are provided for the printer subsystem, each having its assigned functions and both can operate concurrently to accomplish the required functions. Figs. 51A and 51B join together as shown in Fig. 52 to illustrate the details of the Printer Control Unit 3 and Electronics 4,

55

Fig. 1. Various abbreviations used herein are listed in Table III below:

TABLE III

| ABO | - | Address Bus Out |
|---|---|---|
| CMA | - | Communications Adapter Card |
| CTA | - | Control Adapter Card |
| CTL | - | Control |
| D | - | Data |
| DI | - | Data In |
| DBI | - | Data Bus In |
| DBO | - | Data Bus Out |
| HIG | - | Head Image Generator |
| MODE/OP | - | Mode/Operation |
| ROS | - | Read Only Storage |
| SAR | - | Storage Address Register |
| STG | - | Storage Bus In |

There are actually seven main blocks comprising the Printer Control Unit representing seven printed circuit cards. The first block is the Communications Interface 201 between the host system and digital printer electronics. That interface communicates with the Communications Adapter (CMA) 202 which is a microprocessor card that takes the host information and compiles it into a form that can be used by the rest of the printer. The CMA includes Communications microprocessor CMM 200. From there, the information is passed on to the Head Image Generator 220 card for building images for the printer. There is another micropocessor card that is the Control Adapter Card (CTA) 211. The CTA includes Control microprocessor CTM 210. The Control Adapter handles the processed information from the Communications Adapter, controls all the mechanical elements of the printer, such as the motors, and receives emitter signals indicating positions of the mechanical elements. This Adapter handles communication with the actual hardware through the Control and Sense card 212 and the Head Latch card 213 that stores the data to be outputted to the wire actuators.

Within the Communications Interface are two blocks. One is
the Interface Control block 203; the other is the Interface
Storage block 204. The Interface Control block 203 interprets the information coming from the host system in an
analog signal form, processes it into digital form, and
generates the necessary timing signals to be able to store
this information in the Interface Storage 204. The Interface
Storage 204 is a Functional Storage Unit (FSU) random access
memory which is sized at one K (1K or 1024) bytes. All data
and commands from the host system go into this Interface
Storage; it acts as a buffer for the Communications Adapter
202. Within the Communications Adapter card, there are five
blocks. There is the Communications microprocessor 200 (CMM)
and its corresponding storage 205 designated "A" which
includes both random access memory and read only storage
(ROS). There is a Mode/Op Panel and Sense block 206 that
can read the panel 26, a Mode Op Panel Output block 207 to
output displays to the panel, and Decode Logic 208 for these
functions. The Communications Adapter 202 translates the
information that the host has sent over through high-level
or handshaking type procecedures and translates it into much
more simple terms such as characters to be printed or carriage returns, or line feeds -any other mechanical type
control that needs to be performed. Its program is stored
in the Read Only Storage (ROS) of the CMA "A" storage.
There are 6K bytes in this ROS. The CMA also handles Hardware Operator commands involving printing the printer
on-line, taking it off-line and displaying any type of
status information through the display on the Mode Operator
Panel 26.

The Communications Storage card 215 has two blocks entitled
CMA Storage "B" designated 216 and Head Image Generator
(HIG) Storage 217. Storage "B" block 216 contains up to 14K
bytes of ROS storage in FSU (Functional Storage Unit)
technology for the Communications Adapter microprocessor 200. The random access memory storage 217 has 3K bytes for the Head Image Generator and is where the Communications microprocessor stores character images to be printed. The character images in this storage are used by the Head Image Generator to generate actual images for the slanted heads. Also, in the block of Random Access Memory are two text buffers and some scratch pad storage.

Because of the staggered slant geometry of the print head assembly and the multiple head configuration, a fairly complex Head Image Generator 220 (HIG) is required to convert conventional character dot format to a slanted format. HIG processes the character images as they would normally appear in a "straightup" format, but slants them for the Head Latch block 213 to supply to the print wire actuators. This is done through hardware routines that are performed in the Head Image Generator 220. There are basically two blocks in the Head Image Generator, one block being the Control block 221 that actually performs the hardware routines to take the unslanted image and slant it. There is also a Data block 222 that is a small storage unit in which the Head Image Generator stores the slanted information currently being worked on. The Control Adapter 211 can then read this storage and output to the wire actuators through Head Latch 213. This is the slanted data.

The Control Adapter (CTA) 211 has six blocks within it. The Control microprocessor (CTM) 210 receives inputs from various sensors, e.g., ribbon reverse/jam, forms jam, head position, linear encoder, forms position encoder, as well as print commands and data from CMM 200 and HIG 220 and generates print wire firing signals and various control signals to control the ribbon drive, print head drive, print wire actuators, and forms drive. The Control microprocessor (CTM) 210 has a ROS storage 232 that is 12K bytes of FSU ROS to contain its programs or routines. Certain communication registers including Status register 225 and Command register 226 allow the Communications Adapter 202 and the Control Adapter 211 to communicate with one another. Through these registers go commands such as Print commands, Forms commands, Carriage Returns, and the actual decoded messages that the host has sent over. An Input/Output stack 227 is used as a local storage, that is, it is a small random access memory for the Control Adapter to store intermediate data and there is some associated decoding. The Decode block 228 handles the timing relationships for the Communications Adapter and Control Adapter to be able to talk to one another asynchronously.

The Control and Sense card 212 handles the information from the Control Adapter card 211 and interfaces with the actual printer electronics to control by way of Decode block 233 and Printer Control block 234 the head motor, the forms motor, and the ribbon motors represented by block 235. Through blocks 236 and 237 it senses the positional state of printer electronics and mechanics such as the print emitters, forms emitters, etc. The Head Latch card 213 is another interface card from the Control Adapter that latches up the wire image data, the slanted data that is received from the Head Image Generator 220, and outputs it at the correct time to the print wire actuators so that the dots get printed in the correct place on the form.

A typical print operation is now described. It is assumed that a single print line is provided by the host with a Forms Feed and Carriage Return at the end which is a typical situation. This information comes over in a serial stream from the host as analog signals into the Communications Interface 201 which digitizes the analog signal and stores it in its Interface Storage 204 in the form of characters to be printed. A command informs the Communications Adapter 202 that this is a line to be printed and that it has Line Feed and Carriage Return commands. The Communications Adapter 202 seeing this information appear, will take the characters to be printed out of the Interface Storage 204 and put them into a selected text buffer in CMA Storage "B" on Communications Storage card 215.  It then tells the
Control Adapter 211 that it has information in a text
buffer to be printed.

The Control Adapter, after receiving the information initially tells the Head Image Generator 220 (HIG) that there
is data in the selected text buffer that needs to be slanted.  Head Image Generator 220 then slants this information,
while the Control Adapter card 211 starts the printer in
motion; that is, it starts moving the print head carrier 31.
It moves the carrier through commands given to the Control
and Sense card 212, and it looks for print emitters, or
emitters which tell the Control Adapter when to fire wires;
it checks for these signals coming from the Control and
Sense card.  When these signals appear, the CTM retrieves
the slanted wire information from the HIG and passes it to
the Head Latch card 213 and fires the wires to print dots.
The Control Adapter 211 for each print emitter that it sees,
asks the Head Image Generator for a new set of slanted data.
This is outputted to the Head Latch card 213 and is repeated
until the entire text buffer has been printed, that is, all
the information that the host sent over.  Once the Communications Adapter 202 has seen that this has taken place, that
is, the printing has been done, it passes the Forms command
to the Control Adapter 211.  Control Adapter 211 decodes
this command and gives a command to the Control and Sense
card 212 to move forms a certain number of forms emitters.
It senses these forms emitters through the Control and Sense
card again.

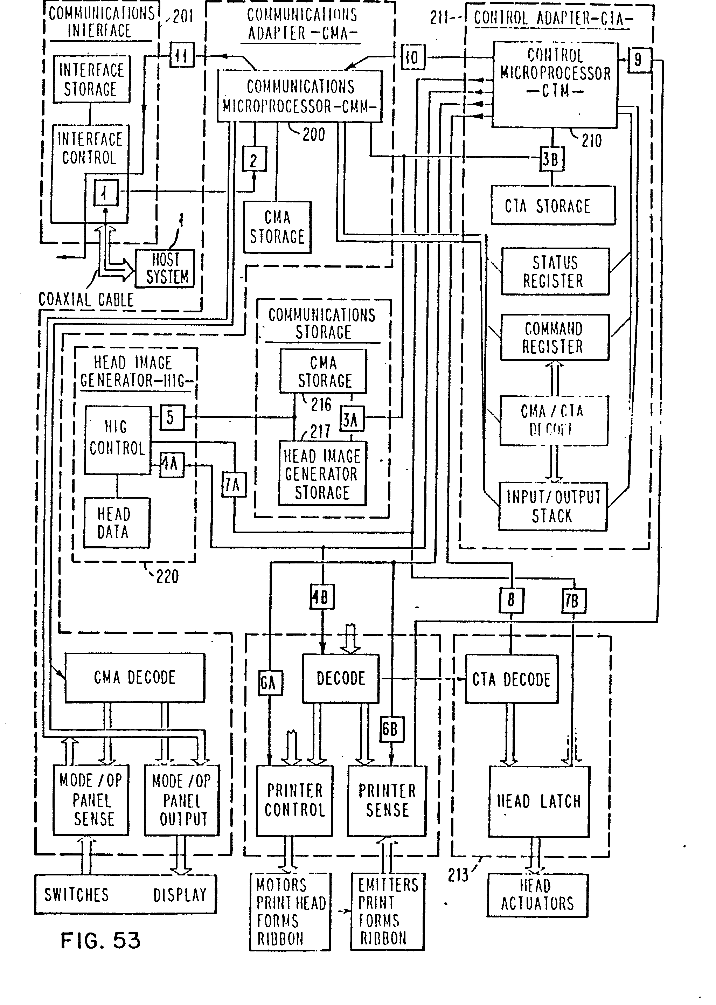

This is further illustrated in Fig. 53.  A typical operation
is assumed to come from the host to the printer controller
unit.  [Steps (paths) are illustrated by numbers in squares].
Path 1 represents receipt of the data and commands by
interface 201.  By path 2, the interface prepares it and
passes it on to the CMA 202.  CMA 202, essentially in two
operations, strips off printable characters and by the path
labeled 3A transfers the characters to the text buffers in

60

CMA Storage 216. Initially, font information is stored in HIG Storage 217. At the same time essentially by path 3B, the CMA 202 supplies print commands to the CTA 211 to start the operation. Next are two operations 4A and 4B. CTA 211 initiates operation 4A to HIG 220 which simply says there is data in the text buffer at a certain address, begin HIG operations. At the same time, the path 4B is effective to tell the Control and Sense card 212 to start any of a number of possible operations of the printer, such as: to move the heads off the ramp, move the forms as necessary, do not move the forms, move the head to a certain absolute position or relative position, etc. Path 5 is a path from HIG 220, a flow from the HIG to the storage blocks 216 and 217 which essentially fetches the data and the font information, that is the hexadecimal representation of the data that it is supposed to operate on to start its wire image generation. Path 6A represents verification by CTA 211 of electromechanical printer operations. This involves checking out the emitters, for example, timing out on the print emitters, etc. to determine that the printer is prepared to print and ready to fire reported back by path 6B.

Paths, 7A and 7B represent fetching of data from the HIG 220 which is the head latch image that is transferred to the head latch card 213 and some checking is done on it at that point by the CTM.

Path 8 represents CTA 211 signalling the head latch block 213 to fire. This is a pedestal signal to fire the wires. Prior to that point, CTA 211 has to have received a print emitter at step 6B in order to issue the pedestal firing signal.

Path 9 represents a feedback signal from the Control and Sense Card 212 and from the head latch card back to CTA 211. CTA 211 will recheck the Control and Sense Card 212 verifying that the operation was performed that was expected to be performed.

Path 10 is a communication path from the CTA 211 to the CMA 202 indicating that the operation that the CMA initiated was accomplished without errors. If there were errors, CMA will be so advised. CMA 202 then compiles status or error information and presents it at Step 11 to the Interface 201 as a poll response to the host.

## Communications Microprocessor (CMM) Operations

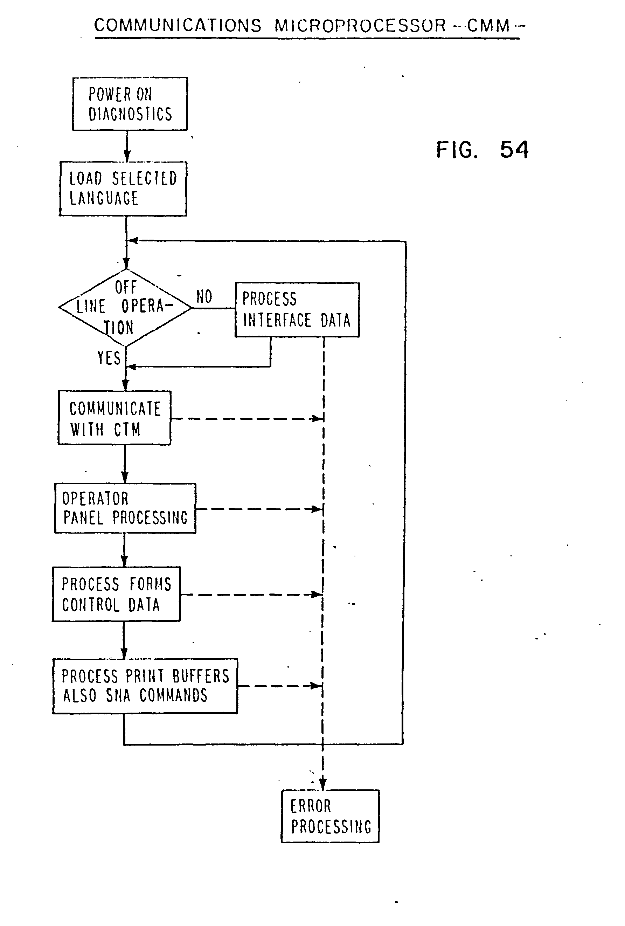

The Communications Microprocessor 200 (CMM) Flowchart, Fig. 54, represents its general operation and starts with the Power On Diagnostics being run. At the conclusion of Power On Diagnostics, the selected language is loaded into the font Memory for processing and printing. A decision is now made as to whether the Mode Switch is in the off-line or on-line position. If it is in the on-line position, then the interface data is processed, or information coming from the host or going to the host, is processed and prepared. If it is in the off-line position, then this process is skipped. Communication with the Control microprocessor 210 (CTM) allows the CMM to receive any errors or information that needs to be passed to the host and it allows the CMM to pass data and commands such as data to be printed, forms, spacing, etc. on to the CTM. Next, the Operator Panel is accessed to determine whether the Start button, Stop button, or other buttons have been depressed for entry information from the Operator Panel. Next, the Process forms or Control data block is checked to determine the movement of forms resulting from commands sent to the CTM. Next is to Process the text buffers which includes SNA commands or the off-line routines. The CMM places them in the proper text buffer to be printed by the CTM and directs the CTM to pick this information up and place it on the paper as dots. Then the CMM checks for online or off-line status and continues the process again.

## Control Microprocessor (CTM) Operations

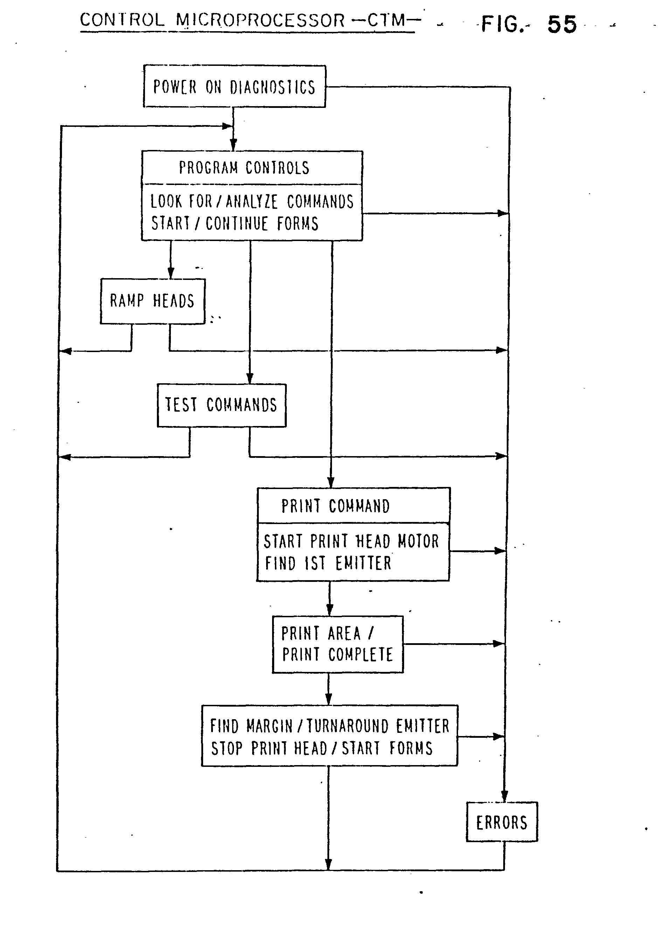

Fig. 55 is an overall block diagram of the operations of the Control microprocessor 210 (CTM). The CTM goes through Power On Diagnostics upon Power Up and then upon successful completion of that proceeds to Program Controls. The function of this is to look for and analyze commands from the Communications microprocessor (CMM) and start or continue forms operation. When a command is determined, if it is a Print Command, CTM starts the print head motor and looks for the first print emitter. Upon finding the first print emitter, CTM goes into the Print block and stays in that area printing the line of data until it reaches Print Complete representing complete printing of the line. Then CTM goes into the margin routines to find the margins or a turnaround emitter. Once the margins or the turnaround emitter are determined, CTM stops the print head, starts the forms and returns to Program Control to look for and analyze further commands. If CTM receives additional commands from the CMM, upon completion of the forms operation, it starts the next print operation. Out of any of these blocks, if an error is detected, CTM exits and goes into an error routine to determine what and where the error is. It notifies the CMM of the error. The CMM, based on the type of error, will either retry the command or stop the operation of the printer and notify the host.

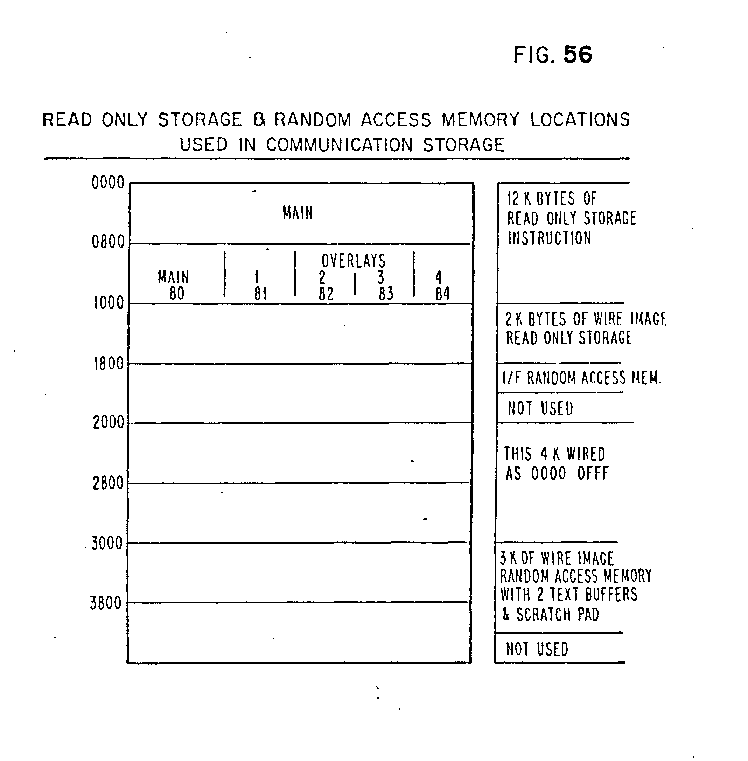

Fig. 56 shows the layout of the Read Only Storage (ROS) and Random Access Memory locations in the Communications adapter.

On the left part addresses are shown as they would apply in the machine. These are four-digit hexadecimal (Base 16) addresses. The microprocessor uses the three low order digits. The first addresses are 0000 to 800 which would indicate a 2K or 2048-byte segment of memory. This is executable code containing the main program entry point.

From 0800 to 1000, there are multiple segments of code by the same address called "overlays". Each overlay is accessed by an OUT command with a number associated with it. There are five separate overlays that can be accessed within the addresses 0800 to 1000; the first overlay being the main overlay 80; the second one, overlay 81; the third one, 82; the fourth one, 83; and the fifth one, 84. Only one of these overlays may be accessed at a specific time until another OUT command selects another overlay.

The addresses 1000 to 1800 are basically still addresses 000 to 800, but serve as data memory versus executable memory. This is where the 2K (2048) bytes of wire images ROS are placed. This is the compressed images used for printing and is where all 16 fonts, or representative images, are stored in the compressed mode to be uncompressed later into the Random Access Memory. From 1800 to 1BFF is where the Interface Random Access Memory Buffers are located, Buffer 1 being at 1800, Buffer 2 at 1900. Each buffer is 256 bytes long. No memory is located in locations 1C00 to 3000. A select byte called the X-byte, if off, will select locations 0000 to 20000 and, if on, will select locations 2000 to 4000. There are data bytes and instruction bytes in the machine, with the X-byte affecting both data and instructions. With this capability, the Interface Buffer is selected with the X-byte off; the Text Buffer is selected with the X-byte on. By internal wiring, any access to any memory in locations 2000 to 3000 will access locations 0000 to 1000. This prevents having to duplicate code when the X-byte changes. Otherwise, it would be necessary to have another Read Only Storage with exactly the same code in both places. By wiring one ROS as if it were in both places, the microprocessor executes this code independently of the X-byte.

Starting at 3000, there are 3K (3072) bytes of Random Access

64

Memory in which the wire images are built from the 2K bytes of wire image ROS locates at 1000. The addresses from 3000 to 38FF are the addresses used for all wire images. In effect, the subsystem is using three digits, which would be 000 to 8FF in this wire image random access memory. All images are stored as 9 slices. By using the first of the three digits to indicate the slice, the next two digits represent the EBCDIC or Extended Binary Coded Decimal Interchange Code value of the characters as sent over by the host of other souce. For example, if the first slice of the letter "C" is required, which is an EBCDIC C3, then the subsystem looks in location 0C3 for the first slice of the image, 1C3 for the second slice of the image, etc. for the letter "C".

From 3B00 to 3FFF, no memory is used. This is basically the layout of memory, both Random Access and Read Only Memory for the Communications microprocessor.

Processing Data - CMM/CTM

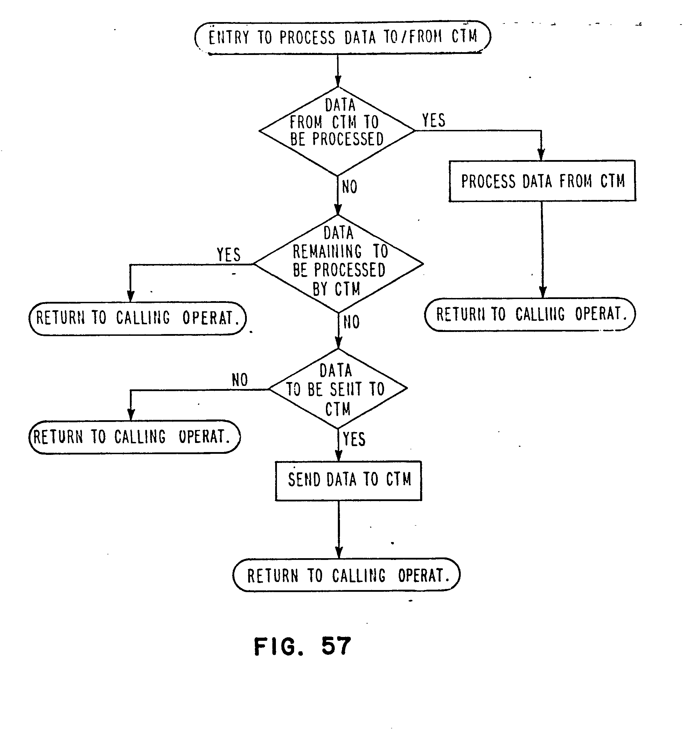

Fig. 57 basically covers the processing of data going to the CTM 210 or coming from the CTM 210 to the CMM 210. The first decision made is, is there data coming from the CTM to be processed;if so, that data is processed and a return is made to the calling operation. If there is no data coming from the CTM, then the question is asked, is there data remaining to be processed by the CTM which has been sent previously. If the answer is "yes", then a return is made to the calling operation to process that data. If there is no data to be processed from a previous entry, then a check is made to see if there is data to be sent to the CTM presently. If there is nothing to send, then a return is made to the calling operation. If data is to be sent to the CTM, the data is picked up and placed on the busses over to the CTM and returned to the calling operation. At this point, any data going in or out from the CMM can be processed.

65

For example, if a buffer has been built from data sent from the host system of Fig. 1, then the information is passed to the CTM as to which text buffer is to be printed, at which density it is to be printed and the count of characters to be printed. If it is a forms command, then the number of emitters that the forms are to move are sent in this command. It is a means of communicating between the two microprocessors.

Layout of Text Buffers

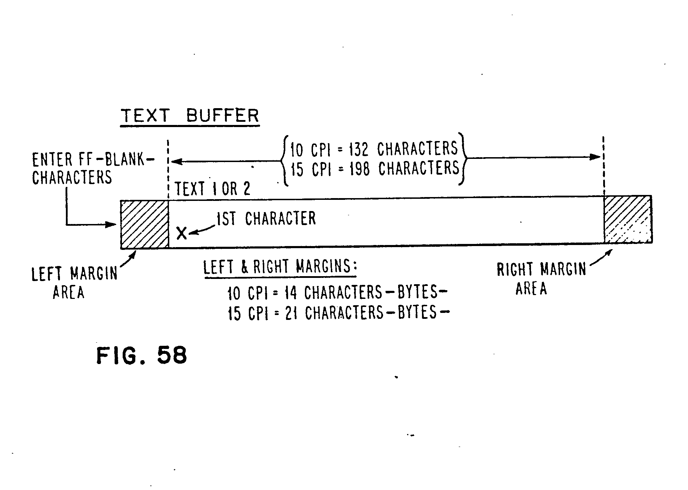

This is in reference to Fig. 58 which illustrates the text buffers that are found in the Random Access Memory of the CMM Controller. There are two buffers; each has a maximum length of 240 bytes to assure the capability of being able to print a 198-character line from either buffer. If the buffer were to be used to print 10 CPI for 132 characters, only 160 bytes of the 240-byte buffers are used. In the case of printing of characters at 10 CPI, the first 14 characters are initialized to FF codes for blank characters. The next 132 positions have whatever printable characters are to be placed on the print line, and the next 14 characters have FF codes which signifies blank characters. For a 15-CPI line, the first 21 characters are FF; the next 198 characters would be the print line to be printed; and the last 21 locations are the right margin area with FF codes. The two blank areas at either end of the print line are established there to insure that the print wires do not fire during this period of time. If the blank areas were not at either end, the microcontroller itself would have to control each wire that was extended into the buffer and, therefore, more complex hardware or an additional microcode would be necessary to do the same task.

As previously described in connection with Figs. 1-55, the printer unit is provided with print heads that have typically eight wires arranged in a serrated, but slanted, configuration relative to the print line. As also previously described, when the print heads are in home position, the first print head is normally to the left of the left margin representing the start of the printing. In addition, the rightmost print head, in order to completely accomplish its assigned printing of dots, moves into the right margin area since the leftmost print wire of the right print head has to pass over the last column of the last character to be printed, assuming that a complete line of characters is being printed.

If only the characters to be printed were to be stored in the random access memory with no provision made for non-print characters in the left and right margin areas, greater complications would be encountered in transferring the character information into the buffers, and the print inhibit scheme described herein solves that problem. Thus, the text buffers, as they are alternately used during printing operations, will each contain character images that represent the physical conditions at the print line including the form areas which have to remain unprinted such as the left and right margins and the character images to be printed.

## Multiple Entry and Overlay Routines

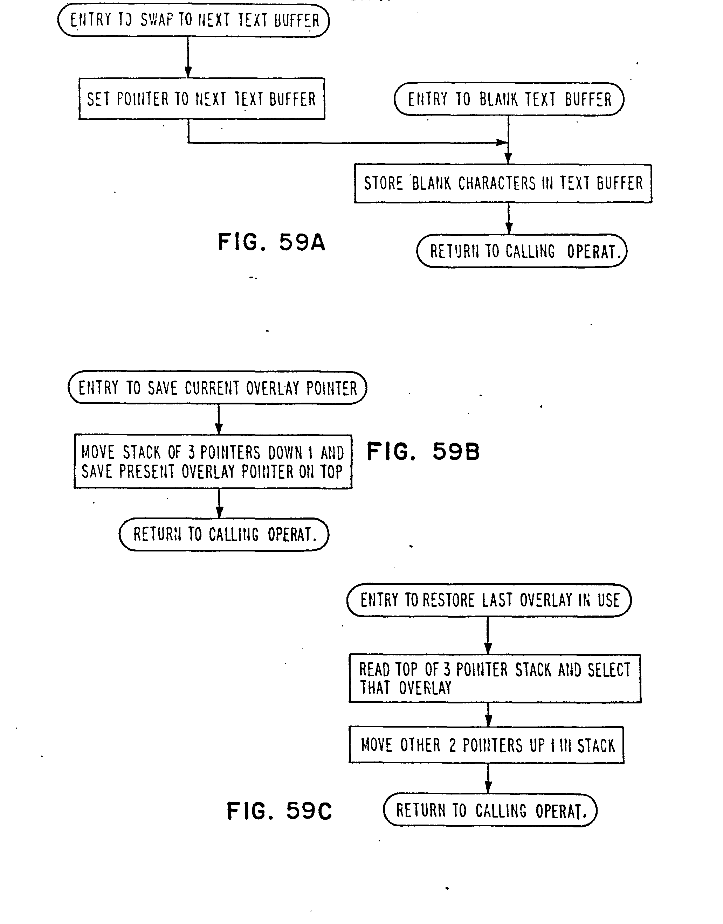

Figs. 59A-59C illustrate these related operations. The first one is a multiple entry operation, Fig. 59A. The first entry is for swapping to the next Text Buffer. The Pointer is selected for the next Text Buffer; then, the second entry point is available. This entry point is for blanking the presently selected Text Buffer. At this point the next Text Buffer is selected and the operation is at the Text Buffer just used to blank it. Blank characters are stored in the current Text Buffer and then a return is made to the calling operation.

The next operation, Fig. 59B, is the save overlay operation which allows a return back in an overlay when another overlay has been selected. This operation uses a stack of three pointers, and upon entry, moves the top two pointers down one, places the current overlay pointer on the top and then returns to the calling operation.

The reverse operation of the save operation is the return operation, Fig. 59C, which reads the top of the three pointer stack and then selects that particular overlay that was on top of the stack. After this overlay has been selected, the stack is moved up, or the bottom two pointers are moved up one in the stack and a return is made to the calling operation.

Blanking of Text Buffers

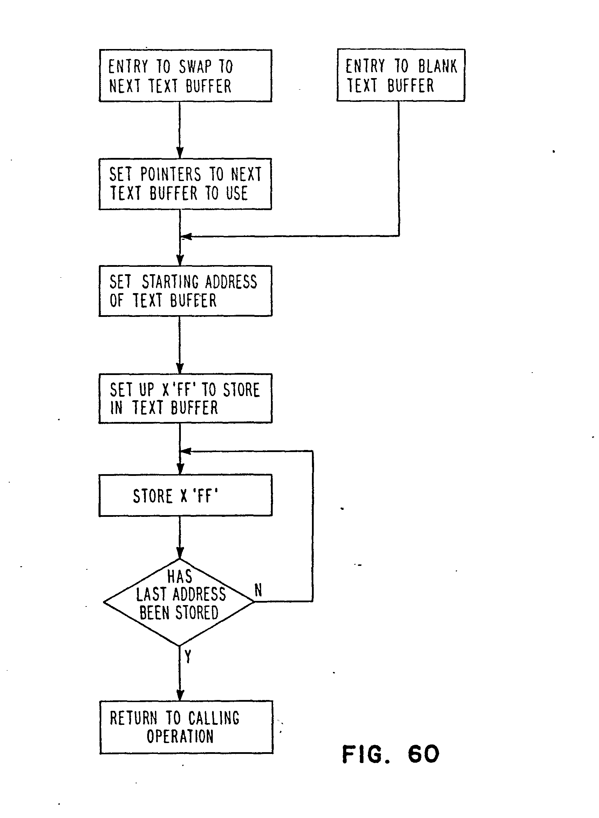

Fig. 60 is a flowchart that expands upon Fig. 59A, showing the entry of the blanking of the Character Text Buffer. The counters are swapped to determine the next Text Buffer to be used, either Number 1 or Number 2. The pointers are set to show that buffer and the starting address is put into the address register. Another register is initialized with hexadecimal character code FF which is a blank character once it is placed in the print line. The data is then stored in the Random Access Memory referencing to the Text Buffer starting position, either Number 1 or Number 2. Once the maximum line of 240 bytes of FF have been stored, the operation then returns to the calling sequence. In setting up 240 bytes of data in there, the system no longer is concerned as to whether printing will be at 10 CPI or 15 CPI since it assumes the maximum entry condition.

Data Transfer From Interface Buffers to Text Buffers

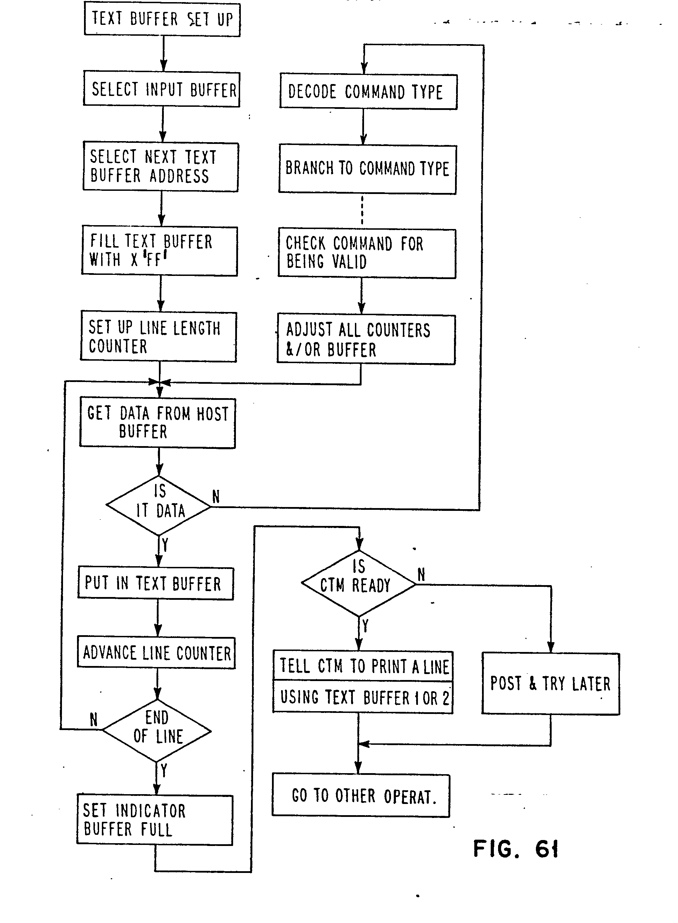

Fig. 61 is a flowchart which describes and defines the way that the CMM receives data from the host system and prepares it for the print buffer in the 3K Random Access Memory.  The Text Buffer is set up as described by the blanking operation. Then the CMM selects the host Input Buffer since there are two 256-byte Input Buffers, and determines the length of the line to be printed which would be either 132 or 198 characters. The CMM then gets the information from the host Buffer and determines whether it is data or a command.  If the byte received was data, it will be placed in the proper Text Buffer for printing at a later time.  It advances the Line Counter which positions the characters and determine if it has reached the end of a print line.  If the end of a print line has not been reached, it will return to get another character to determine whether it was data or command.  The next sequence would describe a byte of data that is a command to be interpreted.  The CMM decodes the command type and then branches to a portion of the microcode that is in ROS that will determine if this command is valid.  A valid command must have a given length and byte, and a given byte configuration depending upon the nature of the command. These commands are all defined in the SCS Command Set.  Once the command has been verified as being correct, the print line is adjusted for any counters that it effects such as the horizontal position in the print line, and then CMM returns to get another byte from the host Input Buffer. Once it has completed the end of the line or determined that a line should be printed, it sets the buffer Full Indicator. Then the CMM finds out if the CTM is ready to receive an additional command.  If the CTM is ready to receive the command, then it instructs it as to which print buffer and line density to use for the next print function.  In the event the CTM is not ready, it will post this command and try later on.  At the end of this time, the CMM goes and performs other tasks such as interrogating the host for additional communications, checking the operator's control panel for functions that it might perform, etc.  Then CMM returns and attempts to print this line at the next opportunity.

69

While a preferred embodiment of the invention has been illustrated and described, it is to be understood that there is no intention to limit the invention to the precise constructions herein disclosed and the right is reserved to all changes and modifications coming within the scope of the invention as defined in the appended claims.

APPENDIX          70

A number of operation codes are utilized by the microprocessors.  These are listed below.

ALU OP CODES

-- MODE VALUE --
REG TO REG 0___
DAR TO DAR 1___
REG TO DAR 2___
DAR TO REG 3___
MSK TO REG 4___
MSK TO DAR 5___

Function OP Codes

| Add                  | A   | 0 |
| Add Carry            | AC  | 1 |
| Move                 | M   | 2 |
| Clear (0)            | CLR | 2 |
| Subtract/Borrow      | SB  | 3 |
| Subtract             | S   | 4 |
| Compare              | C   | 5 |
| Subtract Summary     | SS  | 6 |
| Compare Summary      | CS  | 7 |
| And                  | N   | 8 |
| Set Bit Off          | SBF | 8 |
| Test                 | T   | 9 |
| And Summary          | NS  | A |
| Test Summary         | TS  | B |
| Or                   | O   | C |
| Set Bit On           | SBN | C |
| Shift Right          | SR  | D |
| Exclusive Or         | X   | E |
| Shift Right Circular | SRC | F |

## Conditional Branches

| | | |
|---|---|---|
| Branch Not Carry, Branch High | BNC,BH | C___ODD |
| Branch Carry, Branch Less Than Or Equal | BC,BLE | D___EVEN |
| Branch Not Zero, Branch Not Equal, Branch True | BNZ,BNE,BT | E___ODD |
| Branch Zero, Branch Equal, Branch False | BZ,BE,BF | F___EVEN |

## Unconditional Branches

| | | |
|---|---|---|
| Branch and Wait | BAW | C___EVEN |
| Branch | B | D___ODD |
| Branch and Link | BAL | E___EVEN |
| Branch Via Link | RTN | F001 |
| Return and Link | RAL | F201 |
| Branch Via DAR | BVD | F301 |

## Select Data Address Registers (DAR's) and Storage (STG)

| | | |
|---|---|---|
| Select Memory Data Low | SDL | FC01 |
| Select Memory Data High | SDH | FE01 |
| Select Memory Inst Low | SIL | F481 |
| Select Memory Inst High | SIH | F489 |
| Select Data Bit X Off | SXF | F441 |
| Select Data Bit X On | SXN | F445 |
| Select Main DARS | SMD | F501 |
| Select Aux DARS | SAD | F701 |

72

## Input/Output, Load/Store Ops

| | | | |
|---|---|---|---|
| Input From Device | IN | 68__ | |
| Sense Device | SNS | 69__ | |
| Output To Device | OUT | 78__ | |
| Direct Input and Output | DIO | 7A__ | |
| Load Registers | LDR | 89XY | |
| Load Registers and DAR+1 | LDRP | 8BXY | |
| Load DAR | LDD | 84XY | |
| Load DAR and DAR+1 | LDDP | 86XY | |
| Load Memory Indexed | LDI | 8AO_ | |
| Memory to I/O Device | MIO | 8C__ | |
| Memory to I/O Device and DAR+1 | MIOP | 8E__ | |
| Load Link Register | LDL | 8000 | E |
| Load Link Register and DAR+1 | LDLP | 8200 | E |
| Load Absolute Address | LDA | 9___ | |
| Store Registers | ST | A9XY | |
| Store Registers and DAR+1 | STRP | ABXY | |
| Store DAR | STD | A4XY | |
| Store DAR and DAR+1 | STDP | A6XY | |
| I/O Data To Memory | IOM | AC__ | |
| I/O Data To Memory and DAR+1 | IOMP | AE__ | |
| Store Memory Indexed | STI | AAO_ | |
| Store Link High Order (Even Byte) | SLH | A000 | |
| Store Link High Order and DAR+1 | SLHP | A200 | |
| Store Link Low Order (Odd Byte) | SLL | A100 | |
| Store Link Low Order and DAR+1 | SLLP | A300 | |
| Store In Absolute Address | STA | B__ | |

73

## Microprocessor Registers

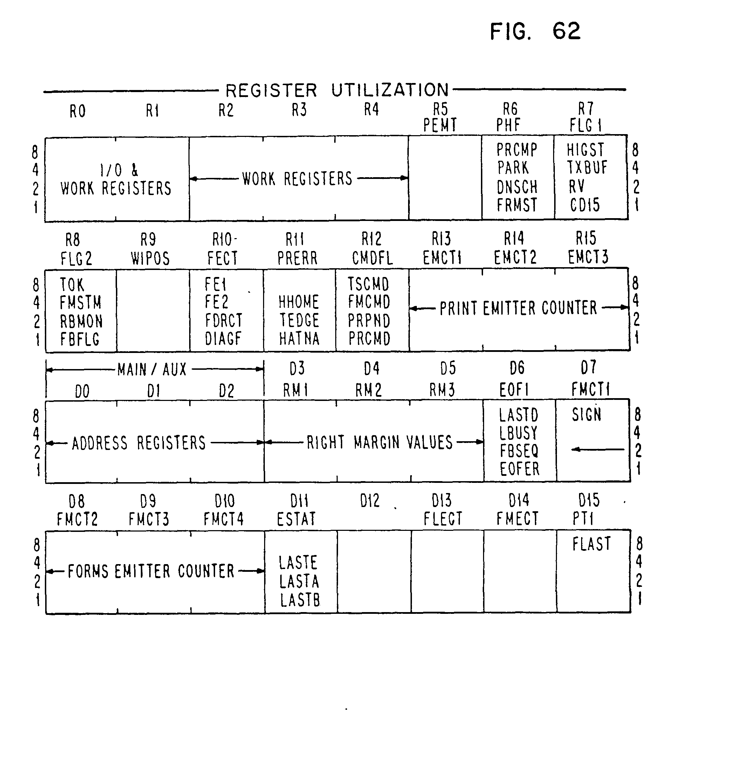

Each of the microprocessors 200 (200a) and 210 (210a) has a number of internal registers that are used for various purposes such as work registers. The register layout for the Control microprocessor 210 (210a) is shown in Fig. 62.

As a convenience, the register assignments are listed below.

### Communications Microprocessor Registers

| WORK0 | EQU | R0 | Work Register |
|-------|-----|-----|---------------|
| WORK1 | EQU | R1 | Work Register |
| WORK2 | EQU | R2 | Work Register |
| WORK3 | EQU | R3 | Work Register |
| WORK4 | EQU | R4 | Work Register |
| WORK5 | EQU | R5 | Work Register |
| WORK6 | EQU | R6 | Work Register |
| WORK7 | EQU | R7 | Work Register |
| WORK8 | EQU | R8 | Work Register |
| WORK9 | EQU | R9 | Work Register |
| WORKA | EQU | R10 | Buffer Indicator Register |
| WORKB | EQU | R11 | Work Register |
| WORKC | EQU | R12 | Work Register |
| POINT | EQU | R13 | Pointers Not in Load Mode |
| EBC | EQU | X'8' | Switch Set to Print EBCDIC |
| PASS2 | EQU | X'4' | Pass Count for Dummy Forms in SBI |
| DHOLD | EQU | X'2' | Hold LED Display |
| COVER | EQU | X'1' | Cover Platen Open Indicator |
| HOST1 | EQU | R13 | (Alternate Use) Host Country Selected Switch |

Communications Microprocessor Registers (Continued)

| | | | |
|---|---|---|---|
| HARD1 | EQU | R14 | Hardware Country Selected Switch |
| LOAD1 | EQU | R15 | Random Access Memory Type of Load Switch |
| | | 0 | Nothing Loaded to Random Access Memory and IPL Mode |
| | | 1 | Multinational Loaded to Random Access Memory |
| | | 2 | Country Overlay of Multinational |
| | | 4 | Mode Switch Modification to Character Set |
| | | 8 | Modification to Character Set |
| DATA0 | EQU | D0,D0 Aux | Address Registers |
| DATA1 | EQU | D1,D1 Aux | Address Registers |
| DATA2 | EQU | D2,D2 Aux | Address Registers |
| DATA3 | EQU | D3 | Buffer Pointer DAR |
| DATA4 | EQU | D4 | Work DAR |
| DATA5 | EQU | D5 | Work DAR |
| DATA6 | EQU | D6 | Work DAR |
| DATA7 | EQU | D7 | Work DAR |
| DATA8 | EQU | D8 | Work DAR |
| DATA9 | EQU | D9 | Work DAR |
| BFNUM | EQU | D10 | Buffer Pointer Indicator |
| GECK | EQU | X'8' | In Graphic Error Mode Indicator |
| BFUSE | EQU | X'4' | Buffer Cleared Indicator |
| BFN2 | EQU | X'2' | Text Buffer 2 Indicator (0=1, 1=2) |
| RAMP | EQU | X'1' | Rest for Ramp Indicator |

## Communications Microprocessor Registers (Continued)

| | | | |
|---|---|---|---|
| LSCON | EQU | D11 | Last Console Setting |
| | | | /F = In Load Mode |
| FMIND | EQU | D12 | Forms Indicator |
| PGUP | EQU | X'8' | Page Up for Display Indicator |
| D2LD | EQU | X'4' | Mask To Test for 2nd Data Load |
| CAN | EQU | X'2' | Cancel Button Held Indicator |
| TRANS | EQU | X'1' | In Transparent Mode Indicator |
| IND | EQU | D13 | Indicators |
| NEG | EQU | X'8' | Negative Skip Indicator |
| XSKIP | EQU | X'4' | More To Skip Indicator |
| PTHLD | EQU | X'2' | Print One Line and Hold |
| PTDON | EQU | X'1' | Print of One Line Done |
| PTRST | EQU | X'3' | Above Two Bits Together |
| CMCTL | EQU | D14 | Command Control Byte |
| D1LD | EQU | X'8' | Mask To Test for 1st Data Load |
| D2LD | EQU | X'4' | Mask To Test for 2nd Data Load |
| D3LD | EQU | X'C' | Mast To Test 1st and 2nd Data Load |
| RESN1 | EQU | X'1' | Mask To Test for 1st Resend |
| RESN2 | EQU | X'2' | Mask To Test for 2nd Resend |
| RESND | EQU | X'3' | Mask To Test for Either Resend |
| NOLD | EQU | X'F' | Mask To Test for No Command |
| MVADJ | EQU | D15 | Adjustment Control Byte |
| RLRD1 | EQU | X'9' | Roll and Ready Indicator Together |
| ROLLD | EQU | X'8' | Roll Display Indicator |
| CHGD | EQU | X'4' | Change To Next Sequence Indicator |
| ADJP1 | EQU | X'2' | Change Density Mask |
| RDY1 | EQU | X'1' | Software Ready Indicator |
| RAMIN | EQU | X'0FFB | End of Random Access Memory in ROS Slot |

## Control Microprocessor Registers

| | | | |
|---|---|---|---|
| I00 | EQU | R0 | Input/Output Register |
| I01 | EQU | R1 | Input/Output Register |
| | | R2 | Work Register |
| | | R3 | Work Register |
| | | R4 | Work Register |
| | | | |
| PEMT | EQU | R5 | Indicates Previous Emitters |
| PHF | EQU | R6 | Print Head Flags |
| FRMST | EQU | X'1' | Forms Start Flag |
| DNSCH | EQU | X'2' | Density Change Flag |
| PARK | EQU | X'4' | Ramp Command Flag |
| PRCMP | EQU | X'8' | Printing is Complete |
| | | | |
| FLG1 | EQU | R7 | Indicator Flags |
| CD15 | EQU | X'1' | Character Density Equals 15 CPI |
| RV | EQU | X'2' | Print Head is Going Left (Reverse) |
| TXBUF | EQU | X'4' | Head Image Generator Is to Use Text Buffer 2 |
| HIGST | EQU | X'8' | Head Image Generator Is to Start Print Lines |
| | | | |
| FLG2 | EQU | R8 | Ribbon Flags |
| FBFLG | EQU | X'1' | Wire Feedback Flag |
| RBMON | EQU | X'2' | Ribbon Motor Is On |
| FMSTM | EQU | X'4' | Forms Time Flag |
| TOK | EQU | X'8' | Turn Around Is OK |
| | | | |
| WIPOS | EQU | R9 | Wire Position Counter |

Control Microprocessor Registers (Continued)

| | | | |
|---|---|---|---|
| FECT | EQU | R10 | False Emitter Counter |
| DIAGF | EQU | X'1' | Diagnostic Flag |
| FDRCT | EQU | X'2' | Direction of Forms Movement |
| FE2 | EQU | X'4' | False Emitter 2 |
| FE1 | EQU | X'8' | False Emitter 1 |
| PRERR | EQU | R11 | Printer Error Flags |
| | EQU | X'8' | Not Used |
| HHOME | EQU | X'4' | Head Home Flag |
| TEDGE | EQU | X'2' | Turnaround Edge Flag |
| HATNA | EQU | X'1' | Head Stopped At Turnaround Flag |
| CMDFL | EQU | R12 | Command Flags |
| PRCMD | EQU | X'1' | Print Command Flag |
| PRPND | EQU | X'2' | Print Command Is Pending |
| FMCMD | EQU | X'4' | Forms Command Flag |
| TSCMD | EQU | X'8' | Test Command Flag |
| EMCT1 | EQU | R13 | Emitter Counters - Used To Determine |
| EMCT2 | EQU | R14 | Head Position by |
| EMCT3 | EQU | R15 | the Number of Emitters From |
| | | | Left Margin |
| MAIN/AUX | EQU | D0,D0 Aux | Address Registers |
| MAIN/AUX | EQU | D1,D1 Aux | Address Registers |
| MAIN/AUX | EQU | D2,D2 Aux | Address Registers |
| RM1 | EQU | D3 | Indicates Right Margin |
| RM2 | EQU | D4 | When the Emitter |
| RM3 | EQU | D5 | Counter Attains This Value |

78

### End of Forms Indicators

| | | | |
|---|---|---|---|
| EOFI | EQU | D6 | End of Forms Indicators |
| LASTD | EQU | X'8' | Last Forms Direction, 1 = Forward; 0 = Reverse |
| LBUSY | EQU | X'4' | Busy History Indicator |
| FBSEQ | EQU | X'2' | Busy Sequence Flag |
| EOFER | EQU | X'1' | End of Forms Detected Indicator |
| FMCT1 | EQU | D7 | 16 Bit Forms AB Emitter Counter |
| FMCT2 | EQU | D8 | |
| FMCT3 | EQU | D9 | |
| FMCT4 | EQU | D10 | |
| SIGN | EQU | X'8' | Counter Sign Bit |

### Emitter Status Register

| | | | |
|---|---|---|---|
| ESTAT | EQU | D11 | |
| LASTE | EQU | X'4' | Last End-of-Forms Emitter Value |
| LASTA | EQU | X'2' | Last Forms A Emitter Value |
| LASTB | EQU | X'1' | Last Forms B Emitter Value |
| | EQU | D12 | |
| FLECT | EQU | D13 | Forms Lost Emitter Counter |
| FMECT | EQU | D14 | Forms Missing Emitter Counter |
| PT1 | EQU | D15 | Program Timer 1/Forms Command Count |
| FLAST | EQU | X'8' | 8 or More Forms Commands Flag |

79

## Equates for Communications Microprocessor

A number of equivalent terms or "equates" are used in the program listings for the Communications microprocessor 200 (200a).  These are as follows:

| Name | Definition |
|------|------------|
| BAL01 | SAVE BAL RETURN OVERLAY POINTER |
| BAL02 | SAVE BAL RETURN OVERLAY POINTER |
| BAL03 | SAVE BAL RETURN OVERLAY POINTER |
| BFCPI | CHARACTER PER INCH - LOOP POSITION |

```
                              0 = 10 A6
                              1 = 15 A6
                              2 = 10 A8
                              3 = 15 A8
                              4 = ABCD
        BIT 0 OFF = 10 CPI  - PRESENT MODE
        BIT 0 ON  = 15 CPI  - PRESENT MODE
        BIT 1 OFF = 10 CPI  - HOST MODE
        BIT 1 ON  = 15 CPI  - HOST MODE
```

| Name | Definition |
|------|------------|
| BFN2 | TEXT BUFFER 2 INDICATOR (0 = 1, 1 = 2) |
| OVLYM | SELECT MAIN OVERLAY MEMORY |
| OVLYN | OVERLAY NUMBER IN OVERLAY |
| OVLY1 | SELECT OVERLAY 1 MEMORY |
| OVLY2 | SELECT OVERLAY 2 MEMORY |
| OVLY3 | SELECT OVERLAY 3 MEMORY |
| OVLY4 | SELECT OVERLAY 4 MEMORY |
| R01SV | SAVE REG 0-1 WHEN OVERLAY PTR SAVE |
| TBF10 | DATA IN TEXT BUFFER 1 (10 CPI) |
| TBF15 | DATA IN TEXT BUFFER 1 (15 CPI) |

80

Labels

The following labels are used by the Communications microprocessor. These serve, for example, as pointers for addressing or for branching purposes.

Labels

BUF15
ECNO
FLBK
RESTK
RTNOV
SAVOV
SELBF
SWPBF
TXBF1
XCOMM

81

## FIND OUT WHICH BUFFER AVAILABLE ROUTINE

Note!!   Set X On Before Branch Here

| Label | Op Code | Arguments | Comment |
|-------|---------|-----------|---------|
| SWPBF | X | BFN2,BFNUM | FIND OUT WHICH BUFFER LAST UP |
| GETBF | LDAR | BFCPI | POINT TO CPI INDICATOR |
| GETBF | M | BFCPI,D2,4 | SET UP ADDRESS IN DAR'S |
|  | M | BFCPI,D1,3 |  |
|  | M | BFCPI,D0,2 |  |
|  | LDD | D0,D1 | LOAD IT |
|  | T | X'8',D0 | TEST FOR 15 CPI |
|  | BT | BUF15 | BRANCH IF SO |
| BUF10 | EQU |  |  |
|  | M | TBF10,D1,3 | LOAD START OF 10 CPI BUFFER |
|  | M | TBF10,D2,4 | LOAD START OF 10 CPI BUFFER |
|  | B | SELBF | GO SELECT BUFFER |
| BUF15 | EQU |  |  |
|  | M | TBF15,D1,3 | LOAD START OF 15 CPI BUFFER |
|  | M | TBF15,D2,4 | LOAD START OF 15 CPI BUFFER |
| SELBF | M | TBF10,D0,2 | LOAD START OF 10 AND 15 CPI BUFFER |
|  | T | BFN2,BFNUM | CHECK TO FIND WHICH BUFFER UP |
|  | BF | TXBF1 | BRANCH IF FIRST |
|  | A | X'1',D0 | SET SECOND IF NOT |
| TXBF1 | B | RTNOV |  |

82

ROUTINE TO SAVE RETURN POINTER TO PROPER MEMORY

| Label | Op Code | Arguments | Comment |
|-------|---------|-----------|---------|
| SAVOV | SXN | | |
| | STA | R01SV | SAVE REGS 0/1 |
| | LDA | BAL02 | LOAD BAL RETURN #2 |
| | STA | BAL03 | SAVE AS BAL RETURN #3 |
| | LDA | BAL01 | LOAD BAL RETURN #1 |
| | STA | BAL02 | SAVE AS BAL RETURN #2 |
| | SDL | , | SET DATA LOW TO READ FROM OVERLAY |
| | LDA | OVLYN | GET CURRENT OVERLAY POINTER |
| | SDH | , | RETURN DATA HIGH FOR NORMAL DATA |
| | STA | BAL01 | SAVE AS BAL RETURN #1 |
| | LDA | R01SV | RESTORE REGS 0/1 |
| | RTN | , | RETURN |

THIS SUBROUTINE WILL FIND AND BLANK THE NEXT BUFFER

| Label | Op Code | Arguments | Comment |
|-------|---------|-----------|---------|
| BFBLK | EQU | | |
| | BAL | SAVOV | SAVE POINTER TO RETURN THIS OVERLAY |
| | BAL | SWPBF | GET START OF BUFFER |
| | M | X'0',D2 | FIND BEGINNING OF BUFFER |
| | M | X'0',D1 | |
| | M | X'F',WORK0 | GENERATE A X FF |
| | M | X'1',WORK1 | GENERATE THE COUNTER |
| | M | X'0',WORK2 | |
| FLBK | STRP | WORK0,WORK0 | STORE BLANK EBCDIC VALUE |
| | A | X'1',WORK2 | INCREMENT COUNTER |
| | AC | X'0',WORK1 | INCREMENT COUNTER |
| | BNC | FLBK | CONTINUE IF NO OVERFLOW |

84

ROUTINE TO RETURN TO PROPER MEMORY

| Label | Op Code | Arguments | Comment |
|-------|---------|-----------|---------|
| RTNOV | SXN | | |
| | STA | R01SV | SAVE REGS 0/1 |
| | LDA | BAL01 | LOAD BAL RETURN #1 |
| | OUT | OVLY4 | SET TO MAIN OVERLAY AREA |
| | C | X'4',WORK1 | CHECK FOR PROPER OVERLAY |
| | BE | RESTK | IN GO SHIFT REG STACK |
| | OUT | OVLY3 | SET TO MAIN OVERLAY AREA |
| | C | X'3',WORK1 | CHECK FOR PROPER OVERLAY |
| | BE | RESTK | IN GO SHIFT REG STACK |
| | OUT | OVLY2 | SET TO MAIN OVERLAY AREA |
| | C | X'2',WORK1 | CHECK FOR PROPER OVERLAY |
| | BE | RESTK | IN GO SHIFT REG STACK |
| | OUT | OVLY1 | SET TO MAIN OVERLAY AREA |
| | C | X'1',WORK1 | CHECK FOR PROPER OVERLAY |
| | BE | RESTK | IN GO SHIFT REG STACK |
| | OUT | OVLYM | SET TO MAIN OVERLAY AREA |
| RESTK | LDA | BAL02 | GET BAL RETURN #2 |
| | STA | BAL01 | SAVE AS BAL RETURN #1 |
| | LDA | BAL03 | GET BAL RETURN #3 |
| | STA | BAL02 | SAVE AS BAL RETURN #2 |
| | LDA | R01SV | RESTORE REGS 0/1 |
| RTNIX | RTN | , | RETURN |
| | END | XCOMM | |

85

CLAIMS

1. Automatic print inhibit device in a printer subsystem inter-connected with a host system for receipt of command and data information from the host system and for transmission of status indications to the host system during printing operations, said printer subsystem incorporating a printer unit including a forms feed assembly, a print assembly, and a ribbon drive assembly arranged to produce printed characters on a form at a print line. Storage means in said printer subsystem store command and data information received from said host system during printing operations, such storage means including at least two print text buffers.

This automatic print inhibit device is characterized in that it incorporates:

means (201, 202) for storing in the storage means (216) and on an alternate basis blocks of data received from said host system (1) during printing operations, said blocks being representative of lines of data to be printed on a form by said printer unit, lines of data ordinarily being accompanied by areas where no information is to be printed;

blank character control means (200) operable responsive to signals indicative of new lines of data to be entered into said text buffers to insert blank characters in all text buffer locations prior to loading of any new line of information into a text buffer such blanking operation thereby insuring that no extraneous data is present in the text buffer locations corresponding to the form areas where no information is to be printed.

86

2. Automatic print inhibit device according to the preceding claim characterized in that it further comprises :

   at least one microprocessor (200) for controlling the transfer of command and data information from said host system (1) to said print subsystem and to initiate the blanking operation required prior to the loading of the text buffers.

3. Automatic print inhibit device according to claim 1 or 2, characterized in that the blanking characters entered into the text buffers in storage are characters to which the printer unit normally does not respond during printing operations.

4. Automatic print inhibit device according to claim 1 or 2 or 3 characterized in that it further comprises:

   means (202) in said subsystem for entering data received from said host system (1) in the text buffers in the same relative position as they will ultimately occupy on a form to be printed thereby automatically.

5. Automatic print inhibit device according to any of the preceding claims characterized in that it further comprises :

   means (202, 211) to store in at least one text buffer a set of characters at a first printing density and a different set of characters at a second character density and means to store at least a first minimum number of blank characters in the margin areas of said text buffer that is a first value for the first density and a second value for the second density of printing.

6. Automatic print inhibit device according to claim 5 characterized in that the margin areas where no information is to be printed comprise a left and a right margin areas, the area of characters to be printed lying between said margin areas.

7. Automatic print inhibit device according to claim 6 characterized in that it further comprises :

print head means (212, 213, 35) incorporated in said printer unit, said print head means including print wires (33) arranged according to a slanted pattern, the arrangement being such that when the print heads are in a "home" position in said printer unit, the print wires are located in the margin areas outside the areas requiring the actual printing of characters.

8. Printer subsystem characterized in that it comprises :

a source of command and data information (1);

a printer unit (10) incorporated in said printer subsystem, said printer unit including a forms feed assembly (20), a print assembly (30), and a ribbon drive assembly (40) arranged to produce printed characters on a form at a print line;

storage means (216) in said printer system for storing command and data information during printing operations, such storage means including at least one text buffer;

means (201-202) for storing in said storage means at least one text buffer block of data during printing operations, the blocks of data being representative of lines of data to be printed by said printer unit, lines of data ordinarily being accompanied by left and right margin areas where no information is to be printed;

88

blank character control means (202) in said subsystem operable responsive to signals indicative of new lines of data to be entered into said text buffer to insert blank characters in all text buffer locations prior to loading of any new line of information into the text buffer such blanking operation thereby insuring that no extraneous data is present in the margin areas in said at least one text buffer and as a consequence insuring that said printer unit will not print information in the margin areas.

9.  Printer subsystem according to claim 8, characterized in that it further comprises :

at least one microprocessor (200) for controlling the transfer of command and data information from said source to said printer system and to initiate the blanking routine required prior to the loading of said at least one text buffer.

**FIG. 1**

**FIG. 2**

0027902

FIG. 3

STATUS     <u>26</u>

0   OFF LINE
E   END OF FORMS
D   NO LINE ACTIVITY
C   ADDRESS NOT REC.
B   LINE CHECK
A   DATA CLEARED
9   GRAPHIC CHECK
8   RIBBON JAM
7   COVER OR PLATEN
    OPEN

( <u>56</u> ) ATTENTION     ( <u>57</u> ) READY

DENSITY

| | |
|---|---|
| 10A6 | 10 CPI AT 6 LPI |
| 10A8 | 10 CPI AT 8 LPI |
| 15A6 | 15 CPI AT 6 LPI |
| 15A8 | 15 CPI AT 8 LPI |
| 10CC | HOST CONTROLLED |
| 15CC | HOST CONTROLLED |

DENSITY [ <u>60</u> ] DISPLAY    [ <u>51</u> ] SPACE    [ <u>52</u> ] STOP/RESET    ONE LINE [ <u>53</u> ] START    LED [ <u>59</u> ] DISPLAY    I POWER 58 0

CANCEL [ <u>54</u> ] NEW PAGE

SHIFT [ <u>55</u> ]

**FIG. 4**

ON LINE
BUFFER PRINT
TEST

E
D
C
B
A
9
8

2
3
4
5
6
7

**FIG. 5**

17     18     **FIG. 6**

70    71    72    73

**FIG. 7**

4/31

0027902

FIG.8

0027902

5/31

FIG. 9

TO PIVOT POINT FROM PLATEN CENTER LINE

FIG. 10

FIG. 11

FIG. 12

FIG. 13

6/31

0027902

FIG. 14

140
141
142
143
134
146
33
136
35
79b
79
79a
133a
133b
77

FIG. 15

147
79a
145

FIG. 16

148
79b

0027902

8/34

FIG. 17

FIG. 18

FIG. 19

FIG. 20

FIG. 21

FIG. 22

FIG. 23

0027902

9/31

**FIG. 24**

4°30'REF

**FIG. 26**

35

**FIG. 25**

FIG. 27

FIG. 28

41/31

**FIG. 29**

WIRE GROUP 1 — ⊙1 ⊙2 ⊙3 ⊙4 5⊙ 6⊙ 7⊙ 8⊙
WIRE GROUP 2 — ⊙1 ⊙2 ⊙3 ⊙4 5⊙ 6⊙ 7⊙ 8⊙
WIRE GROUP N — ⊙1 ⊙2 ⊙3 ⊙4 5⊙ 6⊙ 7⊙ 8⊙
LEFT MARGIN

**FIG. 30**

PRINT POSITIONS 1 3 5 7 9 2 4 6 8 1 3 5 7 9 2 4 6 8
PRINT WIRES 1 2 3 4 5 6 7 8
10 CPI
15 CPI

**FIG. 31**

71
A B C
1ST PRINT PULSE
HOME RAMP LEFT MARGIN TURNAROUND

**FIG. 32**

REAL EMITTERS + OPTIONS
REAL EMITTERS
OPERATING SCHEME -EXPANDED SCALE-
ADDITIONAL EMITTERS REQUIRED
1 2 3 4 5 6 7 8 9 1 2 3 4 5 6 7 8 9 1 2 3 4 5 6 7 8 9 1 2
1 3 5 7 9 11 13 15 17 1 3 5 7 9 11 13 15 17 1 3 5 7 9 11 13 15 17 1 3
LEFT MARGIN
CH 1 CH 2 CH 3 CH 4 CH 5 CH 6
0,56 mm
1,41 mm
5,08 mm
5,08 mm
5,08 mm

FIG. 33A

PRINT HEAD 8

—198

—199

198

199

110    111    112

129    130    131    132

165    166    167    168

194    195    196    197    198

FIG. 33B

FIG. 34

| FIG. | FIG. |
|------|------|
| 33A  | 33B  |

13/34

FIG. 35

FIG. 36

FIG. 37

HEAD 1    HEAD 2    PROGRAMABLE HEAD SPACING

C027902

FIG. 38

LOCAL WORK STATION
PRINTER APPLICATION

HOST SYSTEM

INTERFACE CABLE

FIG. 39

REMOTE WORK STATION
REMOTE WORK STATION
PRINTER APPLICATION

HOST SYSTEM

COMMUNICATION LINK

CONTROLLER

INTERFACE CABLE

FIG. 40

CABLE CONNECTORS AND ADDRESS SWITCHES

CABLE CONNECTOR

HOST SYSTEM

TWINAX CABLE

TWINAX CABLE

CABLE LENGTH

HOST SYSTEM

1

INFORMATION STREAM

| DATA FRAME | DATA FRAME | FRAME SYNC | BIT SYNC |

7

FIG. 41

2

CONTROLLER — RECEIVE → 2   FIG. 42

FILL BITS—ALWAYS 000—
PARITY BIT FOR EVEN PARITY
END OF MESSAGE—111—
COMMAND MODIFIER
COMD. OR DATA
SYNC BIT

FILL BITS—ALWAYS 000—
PARITY BIT FOR EVEN PARITY
ADDRESS -000 THROUGH 110—
COMMAND MODIFIER
COMMAND OR DATA
SYNC BIT

0 1 2 3 4 5 6 7 8 9 10 11 12 13 14 15    0 1 2 3 4 5 6 7 8 9 10 11 12 13 14 15

| 0 0 0 | P | 1 1 1 | X X X X X X X X | 1 |   | 0 0 0 | P | @ @ @ | X X X X X X X X | 1 | FRAME SYNC PATTERN |

LAST FRAME    ADDITIONAL FRAMES    FIRST FRAME

2    TRANSMIT → CONTROLLER    FIG. 43

FILL BITS—ALWAYS 000—
PARITY BIT FOR EVEN PARITY
END OF MESSAGE—111—
STATUS
SYNC BIT

FILL BITS—ALWAYS 000—
PARITY BIT FOR EVEN PARITY
ADDRESS—000 THROUGH 110—
STATUS
SYNC BIT

0 1 2 3 4 5 6 7 8 9 10 11 12 13 14 15    0 1 2 3 4 5 6 7 8 9 10 11 12 13 14 15

| 0 0 0 | P | 1 1 1 | X X X X X X X X | 1 |   | 0 0 0 | P | @ @ @ | X X X X X X X X | 1 | FRAME-SYNC PATTERN |

LAST FRAME    ADDITIONAL FRAMES    FIRST FRAME

─END OF MESSAGE-111─     ─ADDRESS-000 THRU 110─

| 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| 0 | 0 | 0 | P | 1 | 1 | 1 | X | X | X | X | X | X | X | X | 1 |

| 0 | 1 | 2 | 3 | 4 | 5 | 6 | 7 | 8 | 9 | 1 | 11 | 12 | 13 | 14 | 15 |
|---|---|---|---|---|---|---|---|---|---|---|---|---|---|---|---|
| 0 | 0 | 0 | P | @ | @ | @ | X | X | X | X | X | X | X | X | 1 |

LAST FRAME          ADDITIONAL FRAMES    8    1ST FRAME

## FIG. 44

HOST SYSTEM

INFORMATION STREAM

| DATA | FORMAT COMMAND | FORMAT COMMAND | OPERATIONAL COMMAND | SYNC |

## FIG. 45

1       2

## SAMPLE TRANSFER SEQUENCE FOR PRINTING DATA

CONTROLLER          PRINTER

1    POLL -FOR STATUS-
2    STATUS -2 FRAMES-
3    WRITE DATA
4    POLL -FOR STATUS-
5    STATUS -2 FRAMES-
6    ACTIVATE WRITE
7    DATA -UP TO 256 FRAMES-

1,4: POLL COMMAND REQUESTS PRINTER STATUS
2,5: RESPONSE STATUS FRAMES INFORM CONTROLLER OF PRINTER AVAILABILITY
  3: WRITE DATA COMMAND PREPARES PRINTER FOR PRINTING OPERATION
  6: ACTIVATE WRITE COMMAND STARTS PRINTING OPERATION
  7: CONTROLLER SENDS DATA & IMBEDDED FORMATTING COMMANDS TO PRINTER

## FIG. 46

OPERATIONAL COMMAND

POLL-X0-

| 0 | 0 | 0 | X | X | X | X | X | X | X | 1 | 0 | 0 | 0 | 0 | 1 |
| 0 | | | | | | | | | | | | | | | 15 |

NOT USED | ACKNOWLEDGE

LINE PARITY RESET

FIG. 47A

FORMATTING COMMAND

NEW LINE-15-

| 0 | 0 | 0 | X | X | X | X | 0 | 0 | 0 | 1 | 0 | 1 | 0 | 1 | 1 |
| 0 | | | | | | | | | | | | | | | 15 |

FIG. 47B

POLL STATUS FRAME 1

| 0 | 1 | 2 | 3 | 4 | 5 | 6 | 7 | 8 | 9 | 10 | 11 | 12 | 13 | 14 | 15 |

FILL

PARITY

PRINTER ADDRESS

BUSY

LINE
PARITY

UNIT NOT AVAILABLE

EXCEPTION STATUS

OUTSTANDING STATUS

SYNC BIT

CURRENT PREVIOUS
RESPONSE LEVEL

FIG. 48

POLL STATUS FRAME 2

| 0 | 1 | 2 | 3 | 4 | 5 | 6 | 7 | 8 | 9 | 10 | 11 | 12 | 13 | 14 | 15 |

FILL

PARITY

END OF MESSAGE

INVALID SCS CONTROL CHARACTER

INVALID SCS PARAMETER

RECEIVE BUFFERS FULL

PRINT COMPLETE

CANCEL REQUEST

THERMAL CHECK

NOT USED

GRAPHIC CHECK

SYNC BIT

FIG. 49

FIG. 50

FIG. 51A

FIG. 52

| FIG. | FIG. |
|------|------|
| 51A | 51B |

FIG. 51B

FIG. 53

COMMUNICATIONS MICROPROCESSOR – CMM –

FIG. 54

```
        ┌──────────────┐
        │  POWER ON    │
        │ DIAGNOSTICS  │
        └──────┬───────┘
               │
               ▼
        ┌──────────────┐
        │ LOAD SELECTED│
        │  LANGUAGE    │
        └──────┬───────┘
               │
               ▼
           ◇ OFF ◇        NO   ┌──────────────┐
        < LINE OPERA- >───────▶│   PROCESS    │
           ◇  TION  ◇          │INTERFACE DATA│
               │               └──────┬───────┘
              YES                     │
               ▼                      │
        ┌──────────────┐─ ─ ─ ─ ─ ─ ─ ─▶
        │ COMMUNICATE  │
        │  WITH CTM    │
        └──────┬───────┘
               │
               ▼
        ┌──────────────┐─ ─ ─ ─ ─ ─ ─ ─▶
        │   OPERATOR   │
        │PANEL PROCESSING│
        └──────┬───────┘
               │
               ▼
        ┌──────────────┐─ ─ ─ ─ ─ ─ ─ ─▶
        │ PROCESS FORMS│
        │ CONTROL DATA │
        └──────┬───────┘
               │
               ▼
        ┌────────────────────┐─ ─ ─ ─ ─ ─▶
        │PROCESS PRINT BUFFERS│
        │ALSO SNA COMMANDS   │
        └──────┬─────────────┘
               │
               ▼
        ┌──────────────┐
        │    ERROR     │
        │  PROCESSING  │
        └──────────────┘
```

0027902

## CONTROL MICROPROCESSOR —CTM— FIG. 55

```
POWER ON DIAGNOSTICS

PROGRAM CONTROLS
LOOK FOR / ANALYZE COMMANDS
START / CONTINUE FORMS

RAMP HEADS

TEST COMMANDS

PRINT COMMAND
START PRINT HEAD MOTOR
FIND 1ST EMITTER

PRINT AREA /
PRINT COMPLETE

FIND MARGIN / TURNAROUND EMITTER
STOP PRINT HEAD / START FORMS

ERRORS
```

0027902

FIG. 56

READ ONLY STORAGE & RANDOM ACCESS MEMORY LOCATIONS
USED IN COMMUNICATION STORAGE

| Address | Main Storage Map | Description |
|---|---|---|
| 0000 | MAIN | 12 K BYTES OF READ ONLY STORAGE INSTRUCTION |
| 0800 | MAIN 80 / OVERLAYS 1 81 / 2 82 / 3 83 / 4 84 | |
| 1000 | | 2 K BYTES OF WIRE IMAGE READ ONLY STORAGE |
| 1800 | | I/F RANDOM ACCESS MEM. |
| | | NOT USED |
| 2000 | | THIS 4 K WIRED AS 0000 OFFF |
| 2800 | | |
| 3000 | | 3 K OF WIRE IMAGE RANDOM ACCESS MEMORY WITH 2 TEXT BUFFERS & SCRATCH PAD |
| 3800 | | |
| | | NOT USED |

```
         ┌─────────────────────────────────────┐
         │ ENTRY TO PROCESS DATA TO/FROM CTM   │
         └─────────────────────────────────────┘
                          │
                          ▼
                    ╱─────────╲
                   ╱   DATA     ╲      YES
                  ╱ FROM CTM TO   ╲──────────────┐
                  ╲ BE PROCESSED  ╱              │
                   ╲             ╱               ▼
                    ╲───────────╱         ┌──────────────────────┐
                        │ NO            │ PROCESS DATA FROM CTM │
                        ▼               └──────────────────────┘
                    ╱─────────╲                   │
          YES      ╱   DATA     ╲                  │
     ┌────────────╱ REMAINING TO  ╲               │
     │            ╲ BE PROCESSED  ╱               │
     ▼             ╲   BY CTM    ╱                ▼
┌─────────────────╲ ╲───────────╱  ┌─────────────────────────────┐
│ RETURN TO CALLING OPERAT. │      │ RETURN TO CALLING OPERAT.  │
└───────────────────────────┘      └─────────────────────────────┘
                        │ NO
                        ▼
                    ╱─────────╲
          NO       ╱   DATA     ╲
     ┌────────────╱ TO BE SENT TO ╲
     │            ╲     CTM       ╱
     ▼             ╲─────────────╱
┌───────────────────────────┐  │ YES
│ RETURN TO CALLING OPERAT. │  ▼
└───────────────────────────┘ ┌──────────────────┐
                              │ SEND DATA TO CTM │
                              └──────────────────┘
                                     │
                                     ▼
                          ┌───────────────────────────┐
                          │ RETURN TO CALLING OPERAT. │
                          └───────────────────────────┘
```

**FIG. 57**

0027902

## TEXT BUFFER

10 CPI = 132 CHARACTERS
15 CPI = 198 CHARACTERS

ENTER FF-BLANK-
CHARACTERS

TEXT 1 OR 2

X ← 1ST CHARACTER

LEFT MARGIN
AREA

LEFT & RIGHT MARGINS:
10 CPI = 14 CHARACTERS — BYTES —
15 CPI = 21 CHARACTERS — BYTES —

RIGHT MARGIN
AREA

## FIG. 58

0027902

ENTRY TO SWAP TO NEXT TEXT BUFFER

SET POINTER TO NEXT TEXT BUFFER

ENTRY TO BLANK TEXT BUFFER

STORE BLANK CHARACTERS IN TEXT BUFFER

**FIG. 59A**

RETURN TO CALLING OPERAT.

ENTRY TO SAVE CURRENT OVERLAY POINTER

MOVE STACK OF 3 POINTERS DOWN 1 AND SAVE PRESENT OVERLAY POINTER ON TOP

**FIG. 59B**

RETURN TO CALLING OPERAT.

ENTRY TO RESTORE LAST OVERLAY IN USE

READ TOP OF 3 POINTER STACK AND SELECT THAT OVERLAY

MOVE OTHER 2 POINTERS UP 1 IN STACK

**FIG. 59C**

RETURN TO CALLING OPERAT.

0027902

```
┌─────────────────┐        ┌─────────────────┐
│ ENTRY TO SWAP TO│        │ ENTRY TO BLANK  │
│ NEXT TEXT BUFFER│        │ TEXT BUFFER     │
└────────┬────────┘        └────────┬────────┘
         │                          │
         ▼                          │
┌─────────────────┐                 │
│ SET POINTERS TO │                 │
│ NEXT TEXT       │                 │
│ BUFFER TO USE   │                 │
└────────┬────────┘                 │
         │◄──────────────────────────┘
         ▼
┌─────────────────┐
│ SET STARTING    │
│ ADDRESS OF      │
│ TEXT BUFFER     │
└────────┬────────┘
         ▼
┌─────────────────┐
│ SET UP X'FF' TO │
│ STORE IN TEXT   │
│ BUFFER          │
└────────┬────────┘
         ▼◄─────────────┐
┌─────────────────┐     │
│ STORE X'FF'     │     │
└────────┬────────┘     │
         ▼              │
      ╱ HAS  ╲   N      │
     ╱ LAST   ╲─────────┘
     ╲ADDRESS ╱
      ╲BEEN  ╱
       STORED
         │Y
         ▼
┌─────────────────┐
│ RETURN TO       │
│ CALLING         │
│ OPERATION       │
└─────────────────┘
```

FIG. 60

30/31

```
┌─────────────────┐                      ┌─────────────────────┐
│ TEXT BUFFER SET UP │                    │ DECODE COMMAND TYPE │
└────────┬────────┘                       └──────────┬──────────┘
         │                                           │
         ▼                                           ▼
┌─────────────────┐                      ┌─────────────────────┐
│SELECT INPUT BUFFER│                     │BRANCH TO COMMAND TYPE│
└────────┬────────┘                       └──────────┬──────────┘
         │                                           ┊
         ▼                                           ▼
┌─────────────────┐                      ┌─────────────────────┐
│ SELECT NEXT TEXT │                     │  CHECK COMMAND FOR  │
│  BUFFER ADDRESS  │                     │    BEING VALID      │
└────────┬────────┘                       └──────────┬──────────┘
         │                                           │
         ▼                                           ▼
┌─────────────────┐                      ┌─────────────────────┐
│ FILL TEXT BUFFER │                     │ ADJUST ALL COUNTERS │
│  WITH X'FF'      │                     │   &/OR BUFFER       │
└────────┬────────┘                       └──────────┬──────────┘
         │                                           │
         ▼                                           │
┌─────────────────┐                                  │
│ SET UP LINE LENGTH│                                 │
│    COUNTER       │                                 │
└────────┬────────┘                                  │
         │◄───────────────────────────────────────────
         ▼
┌─────────────────┐
│ GET DATA FROM HOST│
│     BUFFER       │
└────────┬────────┘
         │
         ▼
      ╱IS╲        N
     ◄ IT DATA ►─────────────────────────────────────┐
      ╲    ╱                                          │
        │Y                                            │
        ▼                                             │
┌─────────────────┐                                  │
│ PUT IN TEXT BUFFER│                                 │
└────────┬────────┘                                  │
         │                                           │
         ▼                          ╱  IS  ╲     N   │
┌─────────────────┐              ◄ CTM READY ►────────┐
│ADVANCE LINE COUNTER│              ╲      ╱           │
└────────┬────────┘                    │Y             │
         │                             ▼              ▼
    N   ╱ END ╲           ┌──────────────────────┐  ┌──────────────┐
  ◄────◄ OF LINE ►        │TELL CTM TO PRINT A LINE│ │POST & TRY LATER│
       ╲      ╱           │USING TEXT BUFFER 1 OR 2│ └──────┬───────┘
           │Y             └───────────┬──────────┘         │
           ▼                          │◄───────────────────┘
┌─────────────────┐                   ▼
│  SET INDICATOR  │          ┌──────────────────┐
│   BUFFER FULL   │          │ GO TO OTHER OPERAT.│
└─────────────────┘          └──────────────────┘
```

FIG. 61

FIG. 62

REGISTER UTILIZATION

| | R0 | R1 | R2 | R3 | R4 | R5<br>PEMT | R6<br>PHF | R7<br>FLG 1 | |
|---|---|---|---|---|---|---|---|---|---|
| 8<br>4<br>2<br>1 | 1/0 &<br>WORK REGISTERS | | ← WORK REGISTERS → | | | | PRCMP<br>PARK<br>DNSCH<br>FRMST | HIGST<br>TXBUF<br>RV<br>CD15 | 8<br>4<br>2<br>1 |

| | R8<br>FLG 2 | R9<br>WIPOS | R10-<br>FECT | R11<br>PRERR | R12<br>CMDFL | R13<br>EMCT1 | R14<br>EMCT2 | R15<br>EMCT3 | |
|---|---|---|---|---|---|---|---|---|---|
| 8<br>4<br>2<br>1 | TOK<br>FMSTM<br>RBMON<br>FBFLG | | FE1<br>FE2<br>FDRCT<br>DIAGF | HHOME<br>TEDGE<br>HATNA | TSCMD<br>FMCMD<br>PRPND<br>PRCMD | ← PRINT EMITTER COUNTER → | | | 8<br>4<br>2<br>1 |

| | | MAIN / AUX | | D3<br>RM1 | D4<br>RM2 | D5<br>RM3 | D6<br>EOF1 | D7<br>FMCT1 | |
|---|---|---|---|---|---|---|---|---|---|
| | D0 | D1 | D2 | | | | | | |
| 8<br>4<br>2<br>1 | ← ADDRESS REGISTERS → | | | ← RIGHT MARGIN VALUES → | | | LASTD<br>LBUSY<br>FBSEQ<br>EOFER | SIGN<br>← | 8<br>4<br>2<br>1 |

| | D8<br>FMCT2 | D9<br>FMCT3 | D10<br>FMCT4 | D11<br>ESTAT | D12 | D13<br>FLECT | D14<br>FMECT | D15<br>PT1 | |
|---|---|---|---|---|---|---|---|---|---|
| 8<br>4<br>2<br>1 | ← FORMS EMITTER COUNTER → | | | LASTE<br>LASTA<br>LASTB | | | | FLAST | 8<br>4<br>2<br>1 |

0027902

| | European Patent Office | **EUROPEAN SEARCH REPORT** | Application number<br>EP 80 10 5788 |

## DOCUMENTS CONSIDERED TO BE RELEVANT

| Category | Citation of document with indication, where appropriate, of relevant passages | Relevant to claim |
|---|---|---|
| | US - A - 3 959 780 (KASHIO)<br>* Column 1, line 31 - column 2, line 41; column 3, line 25 - column 4, line 4 * | 1-4,8 |
| | -- | |
| | HEWLETT PACKARD JOURNAL, vol. 29, no. 15, November 1978, pages 8-19 Palo-Alto, Calif., U.S.A.<br>J.J. IGNOFFO et al.: "Managing Dot-Matrix printing with a micro-processor"<br>* Page 8/12, right-hand column - page 9/7, right-hand column * | 1,2,8 |
| | -- | |
| | FR - A - 2 372 703 (PHILIPS)<br>* Page 5, lines 5-14; page 8, line 6 - page 9, line 6; page 22, lines 2-16; page 22, line 35 - page 23, line 15 *<br>& US - A - 4 169 684 | 4,5,7 |
| | -- | |
| | US - A - 3 911 404 (O'NEILL)<br>* Column 4, lines 1-33 * | 1,3 |
| | -- | |
| | US - A - 4 096 484 (FERRE et al.)<br>* Column 5, lines 8-17 * | 1 |
| | -- | |
| | FR - A - 2 055 964 (DURAND)<br>* Page 14, line 8 - page 15, line 5; page 17, lines 7-26; page 18, lines 9-18 * | 1 |
| | ---- | |

**CLASSIFICATION OF THE APPLICATION (Int. Cl.³)**

G 06 F 3/12

**TECHNICAL FIELDS SEARCHED (Int. Cl.³)**

G 06 F 3/12
G 06 K 15/10
G 06 F 3/14

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | |
|---|---|---|
| Place of search<br>The Hague | Date of completion of the search<br>29-01-1981 | Examiner<br>LACROIX |

EPO Form 1503.1 06.78